# EUROPEAN PATENT APPLICATION

(11) **EP 4 632 612 A1**
(43) Date of publication of application: **15.10.2025**
(21) Application number: 23900713.1
(22) Date of filing: 07.12.2023
(51) Int. Cl.: G06F 21/64, H04L 9/30

(54) **IMAGE PROCESSING DEVICE AND METHOD**

(30) Priority: 07.12.2022 US 202263430788 P
(71) Applicant: Sony Group Corporation, Tokyo 108-0075 (JP)
(72) Inventor: HIRATSUKA Yosuke, Tokyo 108-0075 (JP)
(74) Representative: D Young & Co LLP
(86) International application number: PCT/JP2023/043767
(87) International publication number: WO 2024/122601

(57) **Abstract**

The present disclosure relates to an image processing device and method capable of suppressing a drop in the usability of a captured image.

A first hash corresponding to a first signature and a second hash corresponding to a second signature are generated using a captured image and metadata. The first signature is generated using a first private key and the first hash, the second signature is generated using a second private key and the second hash, and a file storing the captured image, the metadata, the first signature, and the second signature is generated. The first private key corresponds to a limited public key publicized only to a first entity having specific privileges other than user privileges, and the second private key corresponds to a user public key also publicized to a second entity having the user privileges. The present disclosure can be applied in, for example, an image processing device, an image processing method, or the like.

## Description

### [Technical Field]

The present disclosure relates to an image processing device and method, and particularly relates to an image processing device and method capable of suppressing a drop in the usability of captured images.

### [Background Art]

A conventional method exists which enables tampering to be detected by adding a digital signature to an image when the image is shot (see PTL 1, for example). A method also exists in which when an image is generated or edited, a history thereof is left with a digital signature such that the history can be traced (see NPL 1, for example). In these methods, a private key is used for the signature, and a public key corresponding to the private key is used for verification. As such, if the private key is leaked, it may be difficult to detect that an image has been tampered with using the digital signature.

In response, methods for limiting the distribution of the public key to only some parties and implementing additional tampering detection have been considered. Implementing additional tampering detection enables stronger tampering detection. Further limiting the distribution of the public key to only some parties then makes it possible to restrict the parties who implement the tampering detection, and the method of tampering detection can be made private (or the scope of its publication can be limited). This makes it possible to suppress a drop in the validity of the tampering detection.

### [Citation List]

### [Patent Literature]

[PTL 1] WO 2022/137798

### [Non Patent Literature]

[NPL 1]
https://c2pa.org/

### [Summary]

### [Technical Problem]

However, limiting the parties to which the public key is distributed in this manner poses a risk that cases such as C2PA, where an editing history which cannot be tampered with is provided in conjunction with a different company's tool or the like, cannot be handled. In other words, there is a risk that the usability (ease of use) of the captured image will drop.

Having been conceived in light of such a situation, the present disclosure makes it possible to suppress a drop in the usability of a captured image.

### [Solution to Problem]

An image processing device according to one aspect of the present technique is an image processing device including: a hash processing unit that generates a first hash corresponding to a first signature and a second hash corresponding to a second signature using a captured image and metadata; a signature generation unit that generates the first signature using a first private key and the first hash, and generates the second signature using a second private key and the second hash; and a file generation unit that generates a file storing the captured image, the metadata, the first signature, and the second signature. The first private key corresponds to a limited public key publicized only to a first entity having specific privileges other than user privileges, and the second private key corresponds to a user public key also publicized to a second entity having the user privileges.

An image processing method according to one aspect of the present technique is an image processing method including: generating a first hash corresponding to a first signature and a second hash corresponding to a second signature using a captured image and metadata; generating the first signature using a first private key and the first hash, and generating the second signature using a second private key and the second hash; and generating a file storing the captured image, the metadata, the first signature, and the second signature. The first private key corresponds to a limited public key publicized only to a first entity having specific privileges other than user privileges, and the second private key corresponds to a user public key publicized to a second entity having the user privileges.

An image processing device according to another aspect of the present technique is an image processing device including: a file obtainment unit that obtains a file storing an image, metadata, a first signature, and a second signature; and a verification unit that verifies authenticity of the image using a limited public key publicized only to a first entity having specific privileges other than user privileges, the image, the metadata, and the first signature. The first signature is a signature generated using a first private key corresponding to the limited public key, a captured image corresponding to the image, and metadata of the captured image. The second signature is a signature generated using a second private key corresponding to a user public key also publicized to a second entity having the user privileges, the image, and the metadata.

An image processing method according to another aspect of the present technique is an image processing method including: obtaining a file storing an image, metadata, a first signature, and a second signature; and verifying authenticity of the image using a limited public key publicized only to a first entity having specific privileges other than user privileges, the image, the metadata, and the first signature. The first signature is a signature generated using a first private key corresponding to the limited public key, a captured image corresponding to the image, and metadata of the captured image. The second signature is a signature generated using a second private key corresponding to a user public key also publicized to a second entity having the user privileges, the image, and the metadata.

In the image processing device and method according to the one aspect of the present technique, a first hash corresponding to a first signature and a second hash corresponding to a second signature are generated using a captured image and metadata; the first signature is generated using a first private key and the first hash, and the second signature is generated using a second private key and the second hash; and a file storing the captured image, the metadata, the first signature, and the second signature is generated. The first private key corresponds to a limited public key publicized only to a first entity having specific privileges other than user privileges, and the second private key corresponds to a user public key also publicized to a second entity having the user privileges.

In the image processing device and method according to the other aspect of the present technique, a file storing an image, metadata, a first signature, and a second signature is obtained; and authenticity of the image is verified using a limited public key publicized only to a first entity having specific privileges other than user privileges, the image, the metadata, and the first signature. The first signature is a signature generated using a first private key corresponding to the limited public key, a captured image corresponding to the image, and metadata of the captured image. The second signature is a signature generated using a second private key corresponding to a user public key also publicized to a second entity having the user privileges, the image, and the metadata.

### [Brief Description of Drawings]

[Fig. 1]

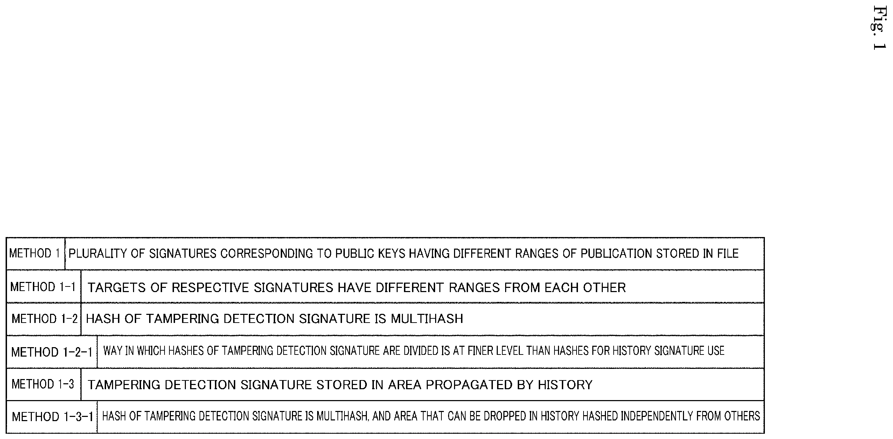

   Fig. 1 is a diagram illustrating an example of a method for generating an image file.
[Fig. 2]

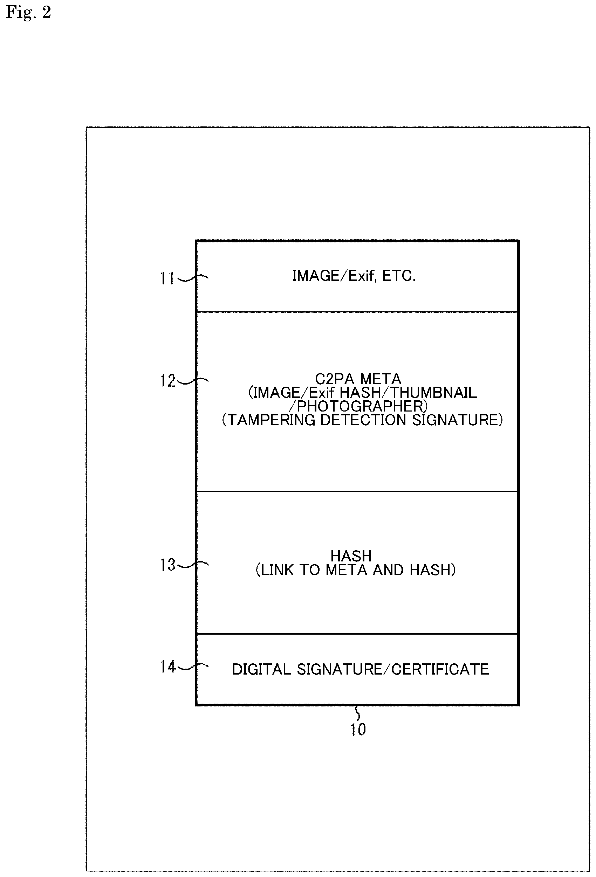

   Fig. 2 is a diagram illustrating an example of the main configuration of an image file.
[Fig. 3]

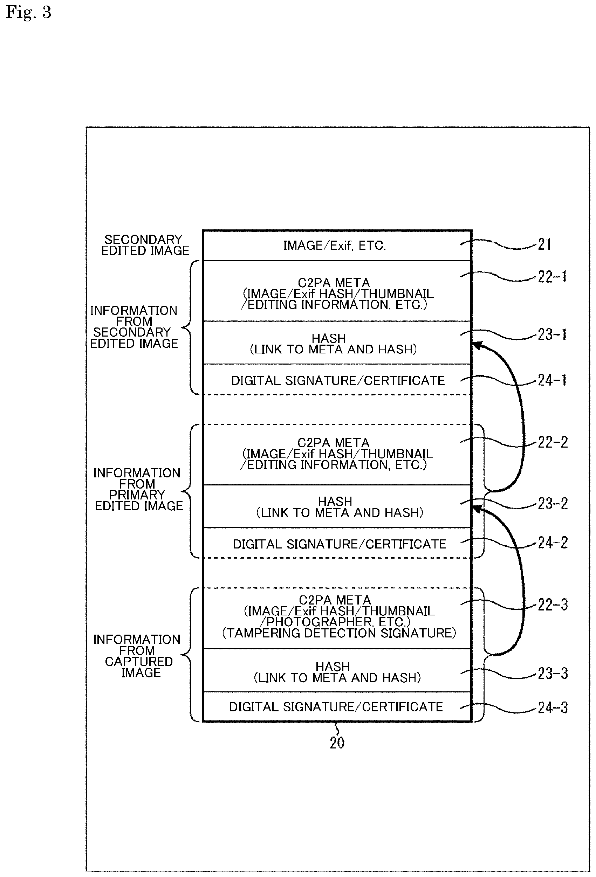

   Fig. 3 is a diagram illustrating an example of the main configuration of an image file.
[Fig. 4]

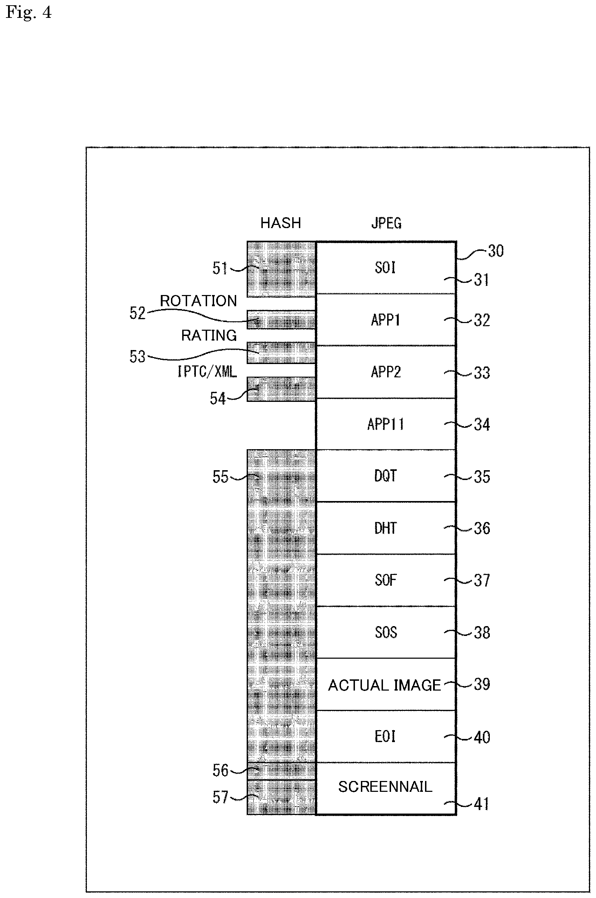

   Fig. 4 is a diagram illustrating an example of a target scope of a hash.
[Fig. 5]

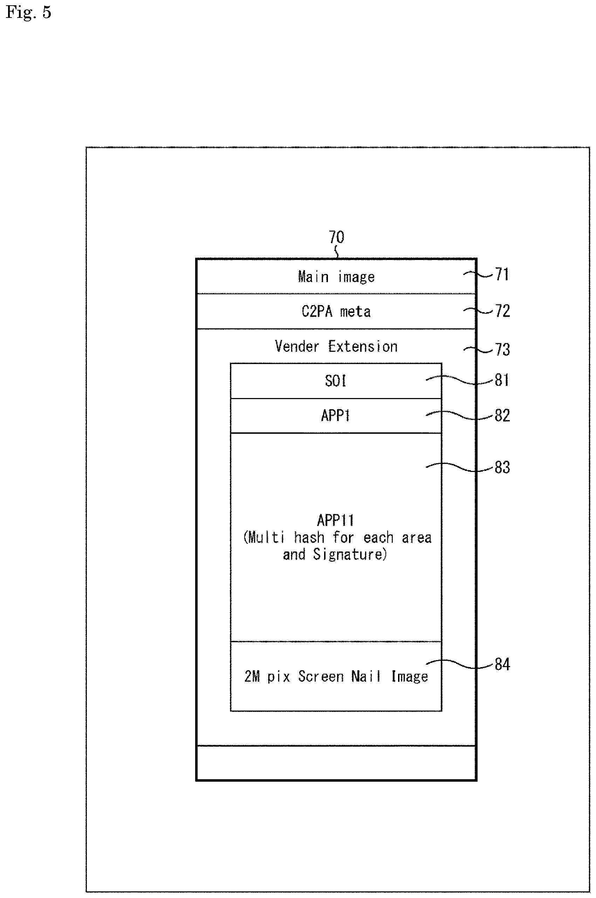

   Fig. 5 is a diagram illustrating an example of a storage location of a signature.
[Fig. 6]

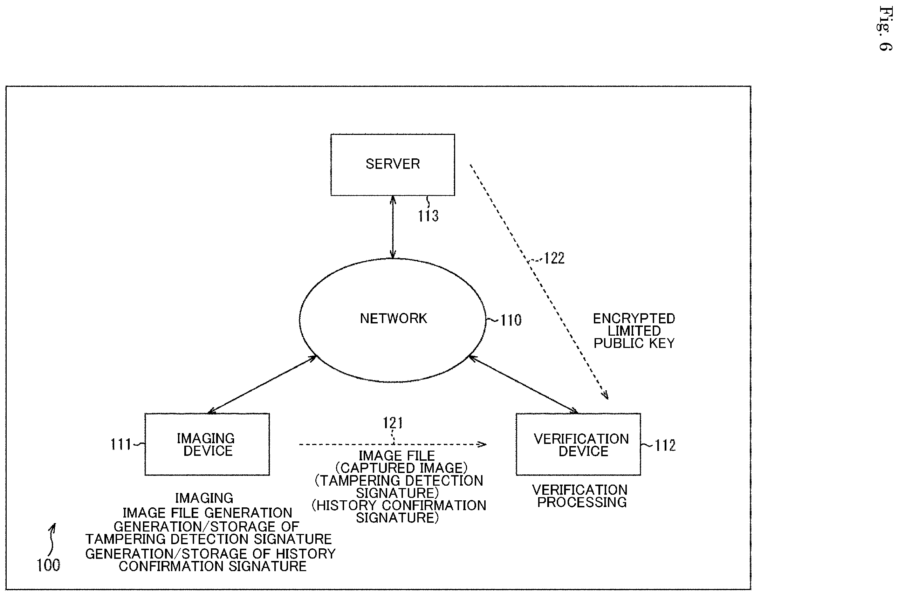

   Fig. 6 is a diagram illustrating an example of the main configuration of an image processing system.
[Fig. 7]

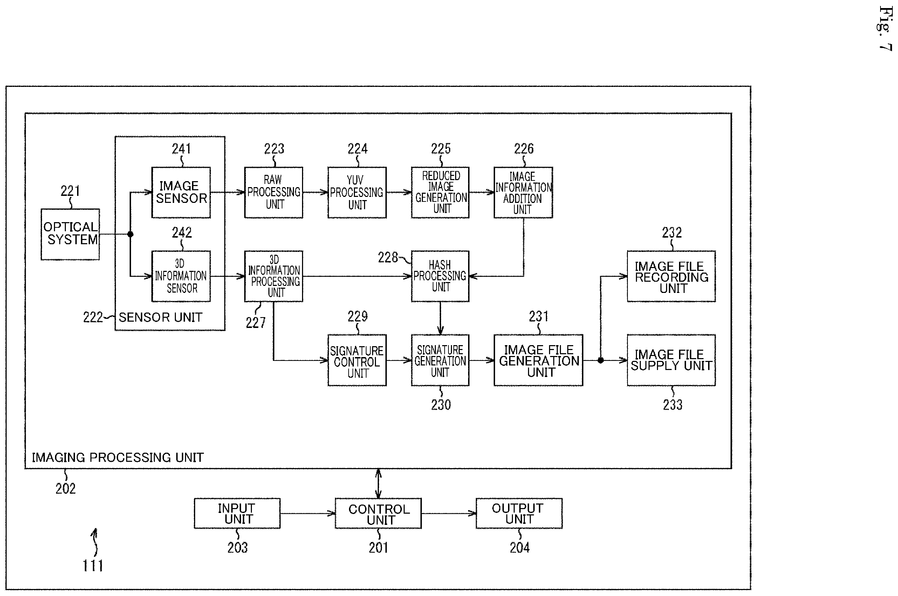

   Fig. 7 is a block diagram illustrating an example of the main configuration of an imaging device.
[Fig. 8]

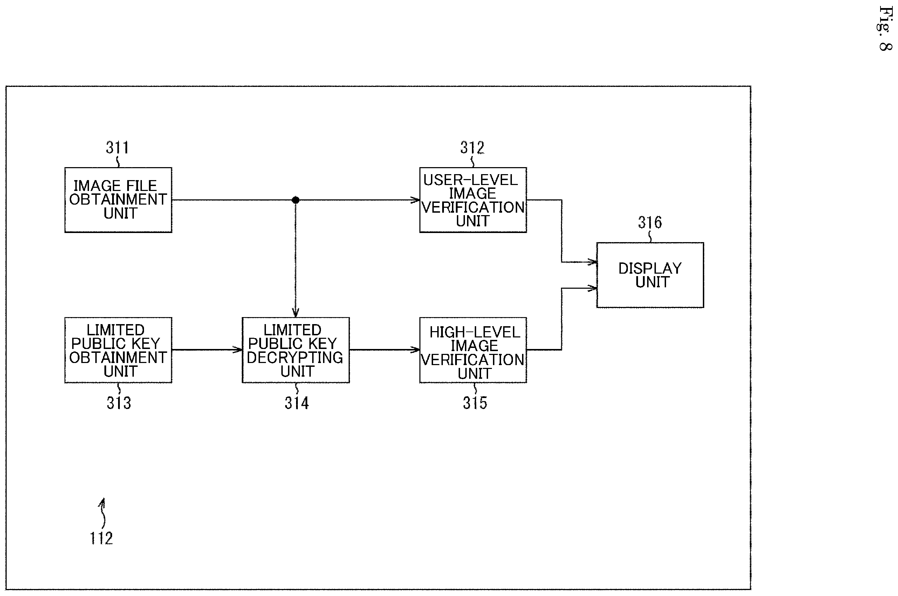

   Fig. 8 is a block diagram illustrating an example of the main configuration of a verification device.
[Fig. 9]

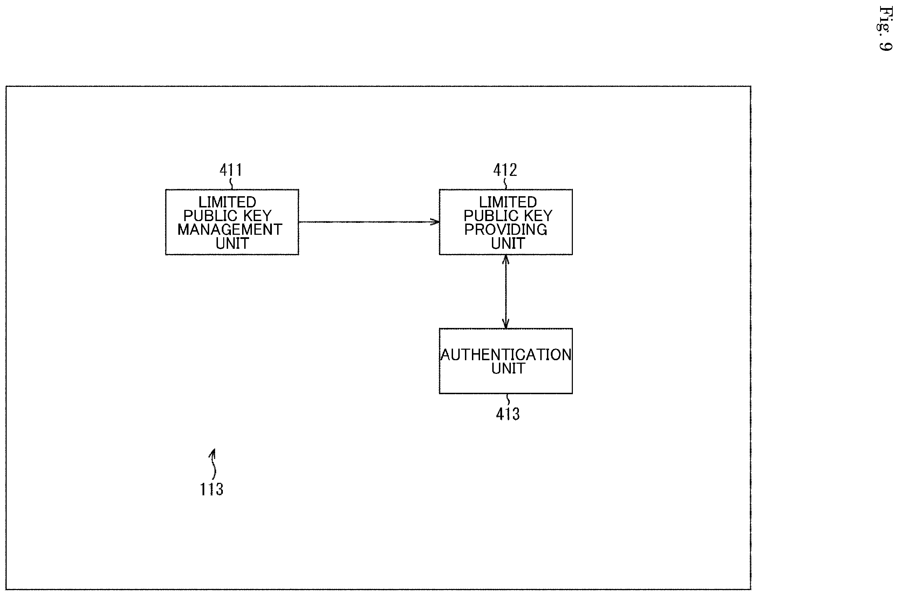

   Fig. 9 is a block diagram illustrating an example of the main configuration of a server.
[Fig. 10]

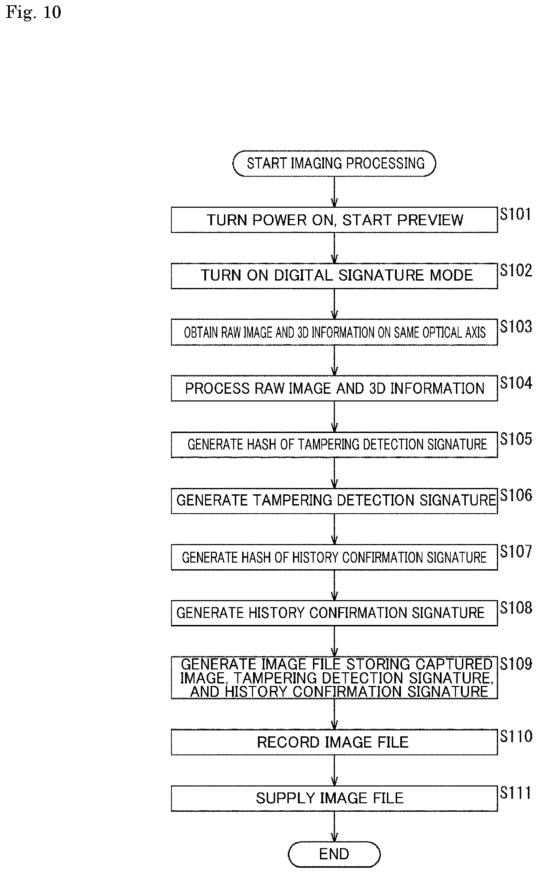

   Fig. 10 is a flowchart illustrating an example of the flow of imaging processing.
[Fig. 11]

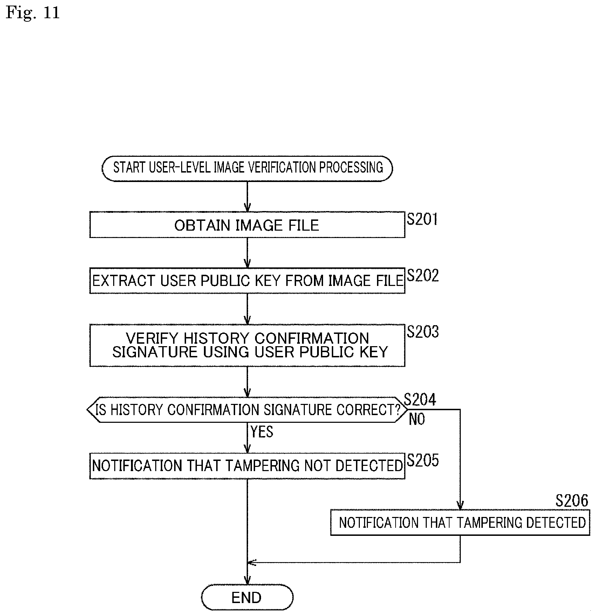

   Fig. 11 is a flowchart illustrating an example of the flow of user-level image verification processing.
[Fig. 12]

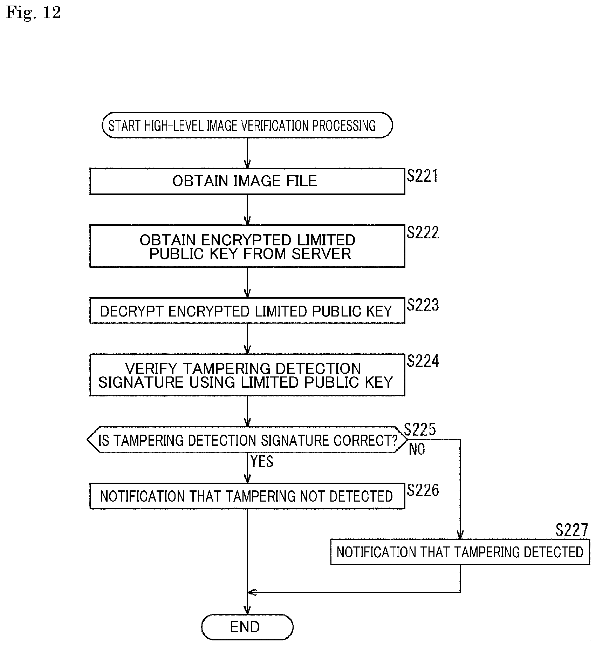

   Fig. 12 is a flowchart illustrating an example of the flow of high-level image verification processing.
[Fig. 13]

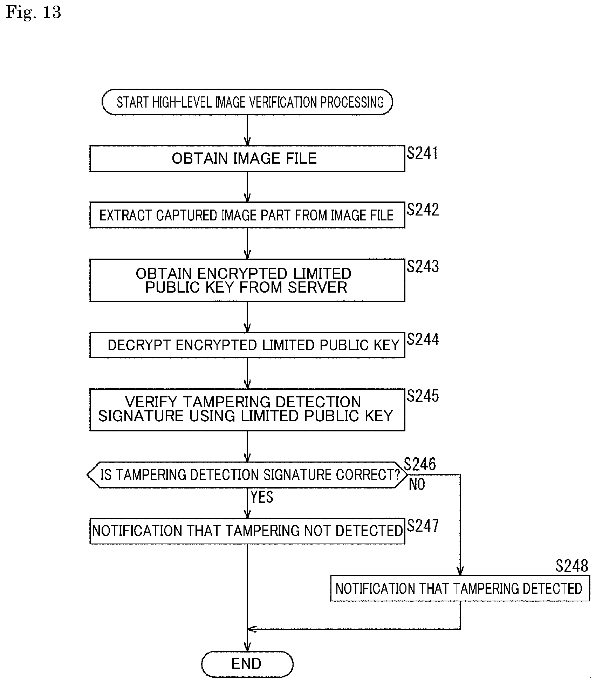

   Fig. 13 is a flowchart illustrating an example of the flow of high-level image verification processing.
[Fig. 14]

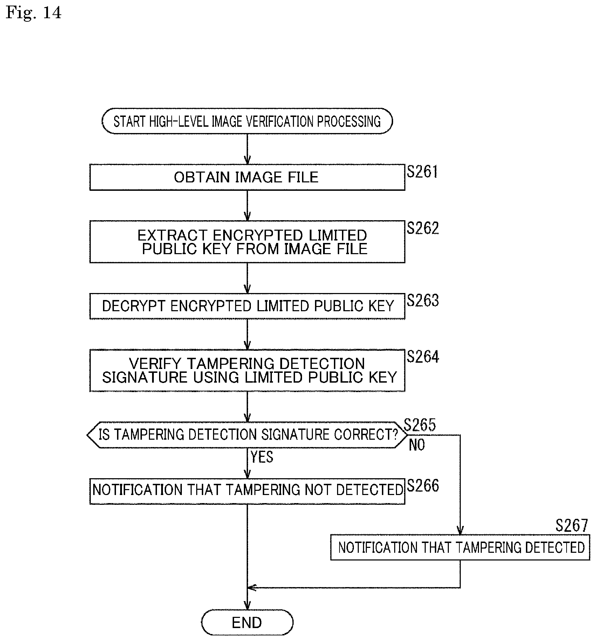

   Fig. 14 is a flowchart illustrating an example of the flow of high-level image verification processing.
[Fig. 15]

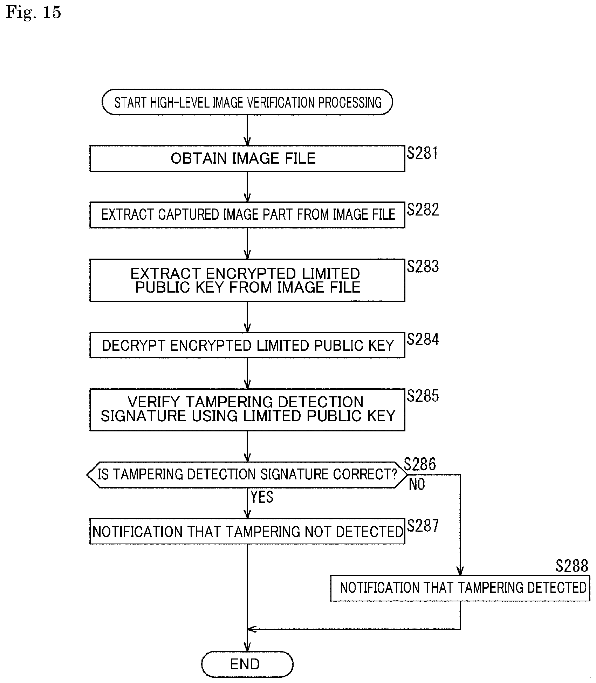

   Fig. 15 is a flowchart illustrating an example of the flow of high-level image verification processing.
[Fig. 16]

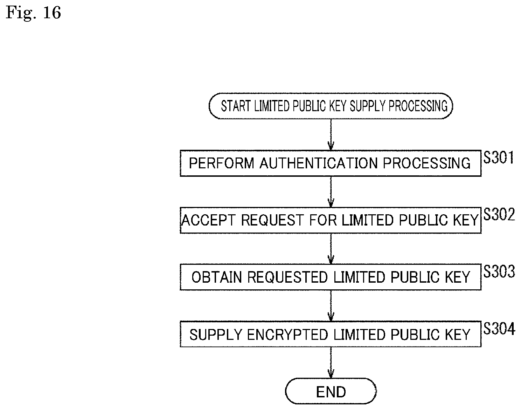

   Fig. 16 is a flowchart illustrating an example of the flow of limited public key supply processing.
[Fig. 17]

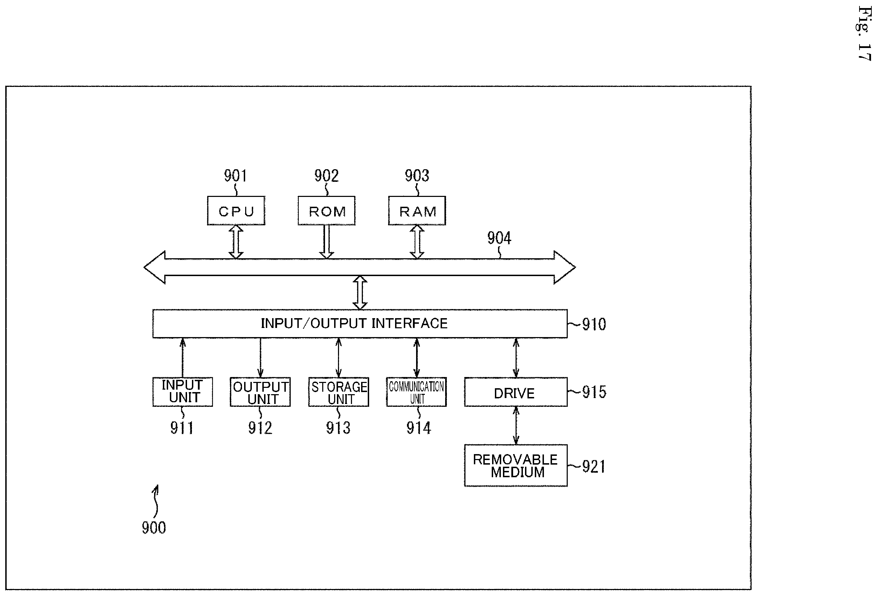

   Fig. 17 is a block diagram illustrating an example of the main configuration of a computer.

### [Description of Embodiments]

Modes for carrying out the present disclosure (hereinafter referred to as "embodiments") will be described below. The descriptions will be given in the following order.
1. Documents that Support Technical Content and Terms
2. Tampering Detection
3. Storing Plurality of Signatures
4. First Embodiment (Image Processing System)
5. Supplementary Notes

### <1. Documents that Support Technical Content and Terms>

The scope disclosed by the present technique is not limited to the content described in the embodiments, and also includes the content described in the following PTL, NPL, and the like that were publicly known at the time of filing, the content of other literature referred to in the following PTL and NPL, and the like.

PTL 1:
   (see above)
NPL 1:
   (see above)

In other words, the content of the PTL and NPL, and the content of other literature referred to in the PTL and NPL described above, are also grounds for determining support requirements.

### <2. Tampering Detection>

### <Detection of Tampering Using Digital Signatures>

A conventional method exists which enables tampering to be detected by adding a digital signature to an image when the image is shot, such as that described in PTL 1, for example. A method also exists in which when an image is generated or edited, a history thereof is left with a digital signature such that the history can be traced, such as that disclosed by NPL 1, for example. During editing, the software or server handling the editing confirms the past history of the image using a public key in the image, carries over the signature of a past tool and a part of the data to be signed as metadata of the new image, signs the new image with a private key, and adds a corresponding public key.

In these methods, a private key is used for the signature, and a public key corresponding to the private key is used for verification. Distributing the public key along with the image enables anyone to detect tampering. As such, if the private key is leaked, there is a risk that an unauthorized user can tamper with the image and use the private key to improperly generate a digital signature, which realistically may make it difficult to detect that the image has been tampered with using the digital signature.

In response, methods for limiting the distribution of the public key to only some parties and implementing additional tampering detection have been considered. Implementing additional tampering detection enables stronger tampering detection. Further limiting the distribution of the public key to only some parties then makes it possible to restrict the parties who implement the tampering detection, and the method of tampering detection can be made private (or the scope of its publication can be limited). This makes it possible to suppress a drop in the validity of the tampering detection.

However, limiting the parties to which the public key is distributed in this manner poses a risk that cases such as C2PA, where an editing history which cannot be tampered with is provided in conjunction with a different company's tool or the like, cannot be handled.

For example, in cases of strict operations, where processing by a third party is treated as tampering, there is a need to limit signature verification to the company's own servers. In contrast, in cases where processing by a third party is allowable to a certain extent, there is a need to enable other companies to verify the signature and to prove the history through integration with tools of the other companies. However, with the current C2PA standard, the two cases described above cannot be implemented simultaneously using the same equipment and the same format. In other words, with conventional methods, it has been difficult to handle both use cases that provide strong tampering detection by limiting signature verification, and use cases that allow other companies to verify signatures and maintain editing histories. In other words, there is a risk that the usability (ease of use) of the captured image will drop.

### <3. Storing Plurality of Signatures>

### <Method 1>

Accordingly, a plurality of signatures corresponding to public keys with different scopes of publication are stored in a file, as indicated in the top row of the table in Fig. 1 (Method 1). More specifically, a signature corresponding to a public key with a limited scope of publication and a signature corresponding to a public key with an unlimited scope of publication are stored in the file.

For example, assume that verification is executed to detect whether an image has been tampered with. Assume also that at that time, only an entity having specific privileges other than user privileges is allowed to apply a verification method capable of stronger tampering detection.

The "verification method capable of stronger tampering detection" here is, for example, a verification method capable of more reliably detecting tampering with an image than a verification method executable by an entity having user privileges. The verification method may be any method. For example, in addition to verification using a signature, verification using information stored in a file (e.g., an image, metadata thereof, or the like) may be applied. Any method may be used for verification using the information stored in this file. For example, the method may detect tampering according to whether there are conflicts between the image and the metadata, or another method may be used. A method that uses information aside from the information stored in the file may be used as well.

Meanwhile, "an entity having specific privileges other than user privileges" indicates an entity having privileges not included in user privileges, such as, for example, a provider or administrator of a system or a service, or a computer, an application, or the like having privileges equivalent thereto. In other words, the "specific privileges" may be a higher level of privileges than the user privileges, for example. As such, the "verification method capable of stronger tampering detection" will also be called "high-level image verification (processing)" herein.

The privileges for executing this high-level image verification are limited to the "entity having specific privileges other than user privileges" described above. In other words, a public key disclosed only to the "entity having specific privileges other than user privileges" is used for "verification using a signature" included in the high-level image verification. This public key will also be called a "limited public key" herein. The signature used in the high-level image verification is generated using a hash of an image, metadata, or the like, and a private key corresponding to the limited public key. This signature will also be called a "first signature" herein. The hash used to generate this first signature (i.e., the hash corresponding to the first signature) will also be called a "first hash". The private key corresponding to the limited public key (i.e., the private key used to generate the first signature) will also be called a "first private key". The first signature is used in verification for detecting tampering with an image as described above, and will therefore also be called a "tampering detection signature".

On the other hand, assume that an entity having user privileges is not allowed to apply the "verification method capable of stronger tampering detection" described above, but is allowed to apply a general verification method.

The "general verification method" here is, for example, a verification method that can be executed by an entity having user privileges. The verification method may be any method. For example, the method may detect that an image has been tampered with using a signature.

The "entity having user privileges" is, for example, a user of a system or a service, or a computer, an application, or the like having privileges equivalent to those of the user. As such, the "general verification method" will also be called "user-level image verification (processing)" herein.

The entity having user privileges is provided with a public key having an unlimited scope of publication. This public key having an unlimited scope of publication will also be called a "user public key" herein. The signature used in the user-level image verification is generated using a hash of an image, metadata, or the like, and a private key corresponding to the user public key. This signature will also be called a "second signature" herein. The hash used to generate this second signature (i.e., the hash corresponding to the second signature) will also be called a "second hash". The private key corresponding to the user public key (i.e., the private key used to generate the second signature) will also be called a "second private key".

For example, generating the second signature through a method compliant with the C2PA standard makes it possible for the entity having user privileges to confirm a history of the editing of an image through the user-level image verification. As such, the second signature will also be called a "history confirmation signature" herein.

The first signature (the tampering detection signature) is used in verification processing for tampering detection, and is therefore generated for a first image (e.g., a captured image). The second signature (the history confirmation signature) is used in verification processing for confirming the history, and is therefore generated for a first image (e.g., a captured image) and is then updated each time the image is edited (that is, a new signature is generated). For example, during editing, the software or server handling the editing confirms the past history of the image using a public key in the image, carries over the signature of a past tool and a part of the data to be signed as metadata of the new image, signs the new image with the second private key, and adds a corresponding user public key.

The first signature (the tampering detection signature) and the second signature (the history confirmation signature) are stored in a file that holds an image, metadata, and the like (also called an "image file").

For example, a first image processing device (e.g., an imaging device) includes: a hash processing unit that generates the first hash corresponding to the first signature (the tampering detection signature) and the second hash corresponding to the second signature (the history confirmation signature) using a captured image and metadata; a signature generation unit that generates the first signature using the first private key and the first hash, and generates the second signature using the second private key and the second hash; and a file generation unit that generates a file storing the captured image, the metadata, the first signature, and the second signature (an image file). Note that the first private key corresponds to the limited public key, which is publicized only to a first entity having specific privileges other than user privileges. The second private key, meanwhile, corresponds to the user public key, which is also publicized to a second entity having the user privileges.

Additionally, the first image processing device (e.g., an imaging device) generates the first hash corresponding to the first signature (the tampering detection signature) and the second hash corresponding to the second signature (the history confirmation signature) using a captured image and metadata, generates the first signature using the first private key and the first hash, generates the second signature using the second private key and the second hash, and generates a file storing the captured image, the metadata, the first signature, and the second signature (an image file). Note that the first private key corresponds to the limited public key, which is publicized only to a first entity having specific privileges other than user privileges. The second private key, meanwhile, corresponds to the user public key, which is also publicized to a second entity having the user privileges.

Doing so makes it possible to apply the signatures during image verification. In other words, high-level image verification and user-level image verification can be realized.

Accordingly, the "entity having user privileges" can edit an image, execute user-level image verification, and the like. In other words, more diverse entities can edit an image, confirm the history of the image edits, and the like. On the other hand, only an "entity having specific privileges" can execute high-level image verification. In other words, not only can more powerful image verification be executed, but also a safer image verification system can be implemented by limiting the scope of publication of the method thereof. In other words, situations where the image verification system breaks down due to information leakage or the like can be suppressed.

In other words, applying Method 1 described above makes it possible, for example, to handle both use cases that provide strong tampering detection by limiting signature verification, and use cases that allow other companies to verify signatures and maintain editing histories. That is, a drop in the usability (ease of use) of the captured image can be suppressed.

It is preferable for the limited public key used in the high-level image verification to be provided through a method that further reduces the possibility of leakage. For example, the limited public key may be supplied having been encrypted through a predetermined method. In other words, the encrypted limited public key may be decrypted and used in the high-level image verification. The limited public key may also be provided from anywhere. For example, the limited public key may be provided from a server that manages the limited public key, or may be stored in an image file in an encrypted state. For example, the imaging device may hold the encrypted limited public key in advance and store the limited public key in an image file.

The user public key may also be provided from anywhere. For example, the user public key may be stored in the image file. For example, the imaging device may hold the user public key in advance and store the user public key in the image file.

The imaging device may also hold the first private key corresponding to the limited public key and the second private key corresponding to the user public key in advance. For example, in the first image processing device, the signature generation unit may hold the first private key and the second private key in advance.

When generating the tampering detection signature and the history confirmation signature, the history confirmation signature may be generated after first generating the tampering detection signature. For example, in a first image processing device, the hash processing unit may generate the first hash using a captured image and metadata; the signature generation unit may generate the first signature using the first private key and the first hash; the hash processing unit may generate the second hash using the captured image, the metadata, and the first signature; and the signature generation unit may generate the second signature using the second private key and the second hash.

Doing so makes it possible to execute user-level image verification without executing high-level image verification. In other words, the history can be confirmed using the user public key (without requiring the limited public key). In other words, the history of image edits can be confirmed by an entity having user privileges.

As described above, the tampering detection signature and the history confirmation signature are generated for the first image. For example, in the imaging device, the tampering detection signature and the history confirmation signature may be generated for a captured image obtained by capturing an image of a subject. In other words, the imaging device may capture an image of the subject and generate the first hash and the second hash using the obtained captured image, the metadata thereof, and the like. For example, the first image processing device may further include an image capturing unit that captures and image of a subject and generates a captured image. The hash processing unit may then generate the first hash and the second hash using the generated captured image and the metadata. Doing so makes it possible to more strongly detect tampering with the captured image, confirm the history of edits to the captured image, and the like.

The tampering detection signature may be stored anywhere in the image file. For example, the tampering detection signature may be stored in an area of the image file where the metadata is stored. For example, in the first image processing device, the file generation unit may store the first signature (the tampering detection signature) in a metadata area, of the file, where the metadata is stored.

Fig. 2 is a diagram illustrating an example of the main configuration of an image file. An image area 11, a metadata area 12, a hash area 13, and a signature area 14 are provided in the image file 10 illustrated in Fig. 2. The captured image (an image, Exchangeable Image File Format (Exif), or the like) is stored in the image area 11, for example. Metadata such as a hash of the image/Exif, a reduced image (a thumbnail, a screennail, or the like), a photographer, or the like is stored in the metadata area 12, for example. The metadata may be metadata defined by the C2PA standard (C2PA meta), for example. A link to the metadata, a hash, or the like is stored in the hash area 13, for example. A digital signature, a certificate, or the like is stored in the signature area 14, for example.

The tampering detection signature is further stored in the metadata area 12 of the image file 10 having such a configuration. Storing the tampering detection signature in the image file as metadata in this manner makes it possible to leave the tampering detection signature as metadata even when the image is edited. This makes it possible to execute high-level image verification even for image files that store edited images.

Note that the history confirmation signature is stored in the signature area 14. This history confirmation signature is generated each time an edit is made. Fig. 3 illustrates an example of the main configuration of an image file when the image is edited. An image file 20 illustrated in Fig. 3 has an image area 21, a metadata area 22-1, a hash area 23-1, a signature area 24-1, a metadata area 22-2, a hash area 23-2, a signature area 24-2, a metadata area 22-3, a hash area 23-3, and a signature area 24-3. In the following descriptions, when the metadata area 22-1, the metadata area 22-2, and the metadata area 22-3 are not distinguished from one another, those areas will also be called "metadata areas 22". Likewise, when the hash area 23-1, the hash area 23-2, and the hash area 23-3 are not distinguished from one another, those areas will also be called "hash areas 23". Furthermore, when the signature area 24-1, the signature area 24-2, and the signature area 24-3 are not distinguished from one another, those areas will also be called "signature areas 24".

The newest image is stored in the image area. In other words, a secondary edited image (an image, Exif, and the like) resulting from two edits to the captured image is stored in the image area 21.

Information from the captured image is stored in the metadata area 22-3, the hash area 23-3, and the signature area 24-3. In other words, the metadata of the captured image (e.g., the hash of the image/Exif, a reduced image, the photographer, and the like) is stored in the metadata area 22-3. The tampering detection signature generated using the hash of the image and the metadata and the first private key is stored in the metadata area 22-3. A link to the metadata stored in the metadata area 22-3 and a hash are stored in the hash area 23-3. The history confirmation signature (a history confirmation signature corresponding to the captured image) generated using the information of the hash area 23-3 (the hash of the image and the metadata, and the like) and the second private key, as well as the user public key and the like, are stored in the signature area 24-3.

Information from a primary edited image resulting from an edit to the captured image is stored in the metadata area 22-2, the hash area 23-2, and the signature area 24-2. In other words, the metadata of the primary edited image (e.g., the hash of the image/Exif, a reduced image, editing information, and the like) is stored in the metadata area 22-2. A link to the metadata stored in the metadata area 22-2 and a hash are stored in the hash area 23-2. The history confirmation signature (a history confirmation signature corresponding to the primary edited image) generated using the information of the hash area 23-2 (the hash of the image and the metadata, and the like) and the second private key, as well as the user public key and the like, are stored in the signature area 24-2.

Information from the secondary edited image resulting from an edit to the primary edited image is stored in the metadata area 22-1, the hash area 23-1, and the signature area 24-1. In other words, the metadata of the secondary edited image (e.g., the hash of the image/Exif, a reduced image, editing information, and the like) is stored in the metadata area 22-1. A link to the metadata stored in the metadata area 22-1 and a hash are stored in the hash area 23-1. The history confirmation signature (a history confirmation signature corresponding to the secondary edited image) generated using the information of the hash area 23-1 (the hash of the image and the metadata, and the like) and the second private key, as well as the user public key and the like, are stored in the signature area 24-1.

In other words, when a single edit is added, the image in the image area 21 is updated, and the metadata area 22, the hash area 23, and the signature area 24 corresponding to that newest image are added to the image file 20. Information of the original image (the image from before the editing) is referenced from the information in the hash area 23. In this manner, the information is stored in the image file 20 as a history for each edit. The history confirmation signature for each edit is stored as well. Accordingly, the user can confirm the history of edits to the image by executing user-level image verification on the image file 20 having such a configuration.

The verification device that verifies the authenticity of the captured image stored in such an image file executes the verification using the limited public key and the tampering detection signature.

For example, a second image processing device (the verification device) includes: a file obtainment unit that obtains a file storing an image, metadata, the first signature (the tampering detection signature), and the second signature (the history confirmation signature) (i.e., an image file); and a verification unit that verifies authenticity of the image using the limited public key publicized only to a first entity having specific privileges other than user privileges, the image, the metadata, and the first signature.

In the second image processing device (the verification device), a file (an image file) storing an image, metadata, the first signature (the tampering detection signature), and the second signature (the history confirmation signature) is obtained; and authenticity of the image is verified using the limited public key publicized only to a first entity having specific privileges other than user privileges, the image, the metadata, and the first signature.

Note that the first signature is a signature generated using the first private key corresponding to the limited public key, the captured image corresponding to the image, and the metadata of the captured image. The second signature is a signature generated using the second private key corresponding to the user public key also publicized to a second entity having the user privileges, the image, and the metadata.

For example, when performing high-level image verification on the image file 20 illustrated in Fig. 3, the verification device extracts the necessary part (information pertaining to the captured image) from the image file 20 and performs the verification.

Doing so makes it possible for the verification device to perform high-level image verification (verification that can detect tampering more strongly).

Note that as described above, it is preferable for the limited public key used in the high-level image verification to be provided through a method that further reduces the possibility of leakage. For example, the limited public key may be supplied having been encrypted through a predetermined method. In other words, the encrypted limited public key may be decrypted and used in the high-level image verification. For example, the second image processing device (the verification device) may further include a decrypting unit that decrypts the encrypted limited public key. The verification unit may then verify the authenticity of the image using the decrypted limited public key, the image, the metadata, and the first signature. Doing so makes it possible to suppress leakage of the limited public key.

The limited public key may also be provided from anywhere. For example, the limited public key may be provided from a server that manages the limited public key. The limited public key may also be stored in an image file in an encrypted state. High-level image verification may also be performed using a reduced image and metadata.

For example, the second image processing device (the verification device) may further include a limited public key obtainment unit that obtains the "encrypted limited public key", supplied from another device. The decrypting unit may then decrypt the obtained "encrypted limited public key", and the verification unit may verify the authenticity of the image using the decrypted limited public key, the image, the metadata, and the first signature. For example, managing the limited public key on a dedicated server makes it possible to suppress leakage of the limited public key. Additionally, when obtaining the limited public key from the server, the verification device may perform authentication processing on the server. Any method may be used for the authentication processing. Performing authentication processing makes it possible to suppress situations where the limited public key is provided to an unauthorized device. The decrypting unit may also extract the encrypted limited public key from the file and decrypt the limited public key.

### <Method 1-1>

When the foregoing Method 1 is applied, the targets of the respective signatures may have different ranges from each other, as indicated in the second row from the top of the table in Fig. 1 (Method 1-1). For example, the range of data covered by the history confirmation signature may be broader than the range of data covered by the tampering detection signature. For example, in the first image processing device (e.g., an imaging device), the hash processing unit may generate the first hash for a first range within the captured image and the metadata, and generate the second hash for a second range broader than the first range.

For example, the history confirmation signature may cover the entirety of the captured image and the metadata, and the tampering detection signature may exclude some of the data in the captured image and the metadata. In other words, the first range described above may be a range excluding some data within the captured image and the metadata. Additionally, the second range described above may be the entirety of the captured image and the metadata.

The some data may be data pertaining to predetermined processing on the captured image. For example, the data pertaining to the predetermined processing may include at least one piece of data pertaining to rotation of the image, data pertaining to a rating (star-based rating) of the image, or International Press Telecommunications Council (IPTC) metadata. Note that the IPTC metadata is metadata compliant with the standard, established by the IPTC, for metadata contained in digital images. For example, the IPTC metadata may include information such as details, the ownership, the shooting location, and the like of the image. More specifically, the IPTC metadata may include information such as a description of the image, a headline of an article, the name of the photographer, the name of a company having a copyright on the image, the name of an event where the image was shot, the shooting location, instructions for editing the image, a status, a contact used when handling the image, license information of the image, additional information about a model, and the like.

Fig. 4 is a diagram illustrating an example of the target range of a hash. In Fig. 4, the square indicated by the bold line on the right side of the figure is Joint Photographic Experts Group (JPEG) data 30. The JPEG data 30 is an example of data of a captured image. As illustrated in Fig. 4, the JPEG data 30 includes a SOI 31, an APP 1_32, an APP 2_33, an APP 11_34, a DQT 35, a DHT 36, an SOF 37, an SOS 38, an actual image 39, an EOI 40, and a screennail 41.

The SOI 31 (Start Of Image) is a start marker that represents the start of the JPEG file. The APP 1_32, APP 2_33, and APP 11_34 are application data set by an application. For example, Exif information is stored in the APP 1_32. International Color Consortium (ICC) profile information is stored in the APP 2_33. The DQT (Define Quantization Table) 35 is a segment that defines a quantization table. The DHT (Define Huffman Table) 36 is a segment that defines a Huffman table. The SOF (Start of Frame) 37 is a segment in which the main information of the image, such as the type of the JPEG file, the size of the image, and the like, is stored. The SOS (Start of Scan) 38 is a segment provided at the start of the image data, in which content such as the components of the image data is stored. The actual image 39 is a segment in which the image data is stored. The EOI (End Of Image) 40 is an end marker that represents the end of the JPEG file. The screennail 41 is a segment that stores a reduced image (screennail) of the image stored in the actual image 39.

Examples of first hashes (a hash 51 to a hash 57) corresponding to the tampering detection signature (the first signature), generated using that JPEG data 30, are indicated by the gray squares on the left side of the figure. The parts of the JPEG data 30 adjacent to the gray squares (the parts located to the right of the squares) are the parts covered by the hashes. For example, the hash 51 mainly corresponds to the SOI 31. In other words, the hash 51 is generated using the SOI 31 and the like. The hash 52 mainly corresponds to the APP 1_32. In other words, the hash 52 is generated using the APP 1_32 and the like. The hash 53 and the hash 54 mainly correspond to the APP 2_33. In other words, the hash 53 and the hash 54 are generated using the APP 2_33 and the like. The hash 55 mainly corresponds to the items from the DQT 35 to the EOI 40. In other words, the hash 55 is generated using the items from the DQT 35 to the EOI 40 and the like. The hash 56 and the hash 57 mainly correspond to the screennail 41. In other words, the hash 56 and the hash 57 are generated using the screennail 41 and the like.

In other words, in the example in Fig. 4, the first hash corresponding to the tampering detection signature (the first signature) is generated for a range excluding data pertaining to the rotation of the image, data pertaining to the rating (a star-based rating) of the image, and the IPTC metadata (IPTC/XML) in the captured image and the metadata (that is, the first range). By doing so, the rotation of the captured image, the rating of the captured image, the updating of the IPTC metadata, and the like are permitted to be edited (processed) in the high-level image verification. In other words, in this case, rotating the captured image is not considered to be tampering with the captured image. Likewise, updating the rating given to the captured image is not considered to be tampering with the captured image. Furthermore updating the IPTC metadata is not considered to be tampering with the captured image.

Image rotation, rating, updating IPTC metadata, and the like are relatively common processing, and in reality, such simple processing (editing) can be thought of as operations not considered to be tampering. In such a case, as described above, excluding some data from being covered by the first hash makes it possible to exclude the predetermined processing (editing) from the tamper detection. For example, simple processing as that described above can be excluded from the tamper detection. In other words, excluding some of the data in the image and the metadata from the coverage of the tampering detection signature in this manner makes it possible, in the high-level image verification, to perform more appropriate tampering detection for real-world applications. At this time, the coverage of the second hash may be the entirety of the image and the metadata. Doing so makes it possible to confirm the history of edits to any part of the image and the metadata. In other words, the coverage of the first hash and the coverage of the second hash may be set independently of each other.

### <Method 1-2>

When Method 1 described above is applied, the hash of the tampering detection signature may be a multihash, as indicated in the third row from the top of the table in Fig. 1 (Method 1-2). In other words, the hash of the tampering detection signature may be constituted by a plurality of hashes corresponding to mutually-different data. For example, in the first image processing device (e.g., an imaging device), the hash processing unit may generate the first hash as a multihash constituted by a plurality of mutually-independent hashes.

Using a multihash makes it possible to execute the verification for each of the plurality of hashes. For example, if the first hash is constituted by a single hash, verification can be executed for the entire target of the first hash, but verification cannot be executed for a part of that target. In contrast, if the first hash is constituted by a plurality of mutually-independent hashes, if the targets of some of the plurality of hashes is deleted, verification can still be executed for the targets of the remaining (undeleted) hashes. In other words, verification can be executed for some of the targets of the first hash.

For example, in the case of Fig. 4, if the hash 51 to the hash 57 are mutually-independent hashes, even if the target of the hash 51 is deleted, verification can still be executed for the targets of the hash 52 to the hash 57. Accordingly, high-level image verification (i.e., stronger verification of captured images) can be executed more reliably (more robustly).

Note that the second hash corresponding to the history confirmation signature may be a multihash. For example, in the first image processing device (e.g., an imaging device), the hash processing unit may generate the second hash as a multihash. Doing so makes it possible to execute the verification for some of the targets of the second hash, as in the case of the first hash. In other words, user-level image verification (i.e., confirmation of the history) can be executed more reliably (more robustly).

### <Method 1-2-1>

When Method 1-2 described above is applied, the way in which the hashes of the tampering detection signature are divided may be at a finer level than the hashes for the history signature use, as indicated in the fourth row from the top of the table in Fig. 1 (Method 1-2-1). In other words, the first hash corresponding to the tampering detection signature may be constituted by more hashes than the second hash. For example, in the first image processing device (e.g., an imaging device), the hash processing unit may generate the first hash as a multihash constituted by more hashes than the second hash.

As the level of dividing the hashes (the granularity) increases, a greater number of parts that have not been deleted can be verified. In other words, by using the configuration described above, more parts that have not been deleted can be verified in the high-level image verification than in the user-level image verification. Note that the second hash may or may not be a multihash.

### <Method 1-3>

When Method 1 described above is applied, the tampering detection signature may be stored in an area propagated by the history, as indicated in the fifth row from the top of the table in Fig. 1 (Method 1-3). For example, in the first image processing device (e.g., an imaging device), the file generation unit may store the first signature (the tampering detection signature) in an area, within the metadata area, that is propagated by the history.

Here, an "area propagated by the history" refers to an area of the image file that is not deleted when the image is edited. Storing the first signature in such an area makes it possible to execute high-level image verification more reliably even when edits are made to the image.

Although the "area propagated by the history" may be any area, the area may, for example, be a vendor extension area (Vendor Extension) that can be extended by a vendor. For example, in the first image processing device (e.g., an imaging device), the file generation unit may store the first signature (the tampering detection signature) in the vendor extension area within the metadata area. For example, an image area (Main image) 71, a metadata (C2PA meta) area 72, and a vendor extension area (Vender Extension) 73 are provided in an image file 70 illustrated in Fig. 5. Segments such as an SOI 81, an APP 1_82, an APP 11_83, and a screennail 84 are then provided in the vendor extension area 73. For example, the tampering detection signature (Multi hash for each area and Signature) may be stored in this APP 11_83.

Note that a new dedicated area for storing the tampering detection signature may be provided in the image file to be propagated by the history.

### <Method 1-3-1>

When Method 1-3 described above is applied, the hash of the tampering detection signature may be a multihash, and an area that can be dropped (or an area that is dropped) in the history may be hashed independently from others, as indicated in the bottom row of the table in Fig. 1 (Method 1-3-1). In other words, for an area to be removed or an area that may be removed by editing, a hash may be generated independently from other areas. For example, in the first image processing device (e.g., an imaging device), the hash processing unit may generate, independently from other hashes, a deletion hash corresponding to an area, of the captured image and the metadata, that is deleted in the history, and generate the first hash as a multihash constituted by a plurality of mutually-independent hashes including the deletion hash.

By using this configuration, when an area is removed by editing, more other areas can be verified. In other words, more information can be verified in the high-level image verification.

### <Combinations>

The methods described above in <3. Storing Plurality of Signatures> may be applied in combination with any other desired method as long as no conflicts arise. Three or more methods may be applied in combination. For example, any two or more of Method 1-1 to Method 1-3-1 may be applied in combination. The methods which can be combined may include not only those indicated in the table in Fig. 1 as "methods", but also all of the elements described above in <3. Storing Plurality of Signatures>. The methods described above may also be applied in combination with methods other than those described above.

Note that the descriptions given herein for the higher-level methods apply to the lower-level methods belonging thereto, as long as no conflicts arise. For example, "Method 1 may be applied" means that each of Method 1-1 to Method 1-3 can be applied. Similarly, Method 1-2-1 can be applied, or Method 1-3-1 can be applied.

### <4. First Embodiment>

### <Image Processing System>

The present technique can be applied in an image processing system that processes captured images (or in devices constituting the system). Fig. 6 is a system diagram illustrating an example of the configuration of an image processing system to which the present technique is applied. An image processing system 100 illustrated in Fig. 6 is a system that processes captured images.

Note that Fig. 6 illustrates the main device configurations, data flows, and the like, and the items illustrated in Fig. 6 are not necessarily all the items. In other words, devices not illustrated in Fig. 6 may be present in the image processing system 100, and processing and data flows not indicated as arrows or the like in Fig. 6 may be present.

As illustrated in Fig. 6, the image processing system 100 includes an imaging device 111, a verification device 112, and a server 113 communicably connected to each other over a network 110. Note that in Fig. 6, one each of the imaging device 111, the verification device 112, and the server 113 are illustrated, but the numbers thereof may be any number. In other words, there may be two or more each of the imaging device 111, the verification device 112, and the server 113. In addition, the numbers of each of the imaging device 111, the verification device 112, and the server 113 need not be the same as one other. In addition, although one network is illustrated as the network 110 in Fig. 6, the image processing system 100 may include a plurality of networks.

The network 110 is a communication network that serves as a communication medium among the devices. The network 110 may be a wired communication network, a wireless communication network, or may include both. For example, the network 110 may be a wired Local Area Network (LAN), a wireless LAN, a public telephone network, a wide-area communication network for wireless mobile devices such as what is known as a 4G network, a 5G network, or the like, or the Internet, or may be a combination thereof. The network 110 may also be a single communication network, or may be a plurality of communication networks. Additionally, for example, the network 110 may be configured, in part or in whole, with a predetermined standard of communication cables, such as, for example, a Universal Serial Bus (USB) (registered trademark) cable, a High-Definition Multimedia Interface (HDMI) (registered trademark) cable, or the like.

The imaging device 111 performs processing pertaining to capturing an image of a subject, i.e., generating a captured image (image file). For example, the imaging device 111 may capture an image of a subject and generate a captured image. The imaging device 111 may generate an image file that stores the captured image and the like. The imaging device 111 may generate a tampering detection signature and store that signature in the image file. The imaging device 111 may generate a history confirmation signature and store that signature in the image file. The imaging device 111 may supply the image file over the network 110 or through a recording medium.

The verification device 112 performs processing related to the verification of images and the like. For example, the verification device 112 may obtain an image file over the network 110 or through a recording medium. The verification device 112 may perform verification processing for detecting tampering with an image or the like stored in the image file. The verification device 112 may also display a result of that verification. Note that the verification device 112 may obtain the "encrypted limited public key" over the network 110, decrypt the obtained key, and use the obtained limited public key in the verification processing.

The server 113 performs processing related to management of the limited public key. For example, the server 113 may manage the encrypted limited public key. The server 113 may also provide the encrypted limited public key over the network 110.

The imaging device 111, the verification device 112, and the server 113 may communicate and exchange information over the network 110. For example, the imaging device 111 may supply an image file to the verification device 112, as indicated by the dotted line double-headed arrow 121. The verification device 112 may obtain that image file. For example, a captured image may be stored in the image file. The tampering detection signature may be stored in the image file. The history confirmation signature may also be stored in the image file.

The server 113 may also provide the limited public key the server 113 itself manages to the verification device 112, as indicated by the dotted line double-headed arrow 122. The verification device 112 may obtain that limited public key. The limited public key may be encrypted.

### <Imaging Device>

The imaging device 111 is constituted by an information processing terminal device having an imaging function, such as a digital camera, a smartphone, a tablet terminal, or a laptop personal computer, for example. The imaging device 111 may be constituted by a single device (electronic device), or may be constituted by a plurality of devices (electronic devices). For example, the imaging device 111 may be constituted by a digital camera and a smartphone. In that case, for example, the digital camera may generate the captured image, and the smartphone may generate the signatures, supply the signatures to the verification device 112, and the like. The imaging device 111 will be described as being constituted by a single device (electronic device) in the following.

Fig. 7 is a block diagram illustrating an example of the configuration of the imaging device 111 serving as one aspect of an image processing device to which the present technique is applied.

Note that Fig. 7 illustrates the main processing units, data flows, and the like, and the items illustrated in Fig. 7 are not necessarily all the items. In other words, the imaging device 111 may include processing units not illustrated as blocks in Fig. 7, and processing and data flows not indicated as arrows or the like in Fig. 7.

As illustrated in Fig. 7, the imaging device 111 includes a control unit 201, an imaging processing unit 202, an input unit 203, and an output unit 204. The control unit 201 controls each of the processing units in the imaging processing unit 202. The imaging processing unit 202 performs processing pertaining to imaging under the control of the control unit 201. The input unit 203 includes an input device such as buttons or switches, for example. The input unit 203 accepts the input of instructions from a user or the like through the input device. The input unit 203 supplies the received instructions to the control unit 201. The control unit 201 may control the imaging processing unit 202 on the basis of the received instructions and the like. The output unit 204 includes an output device such as a monitor or a speaker, for example. The output unit 204 outputs information supplied by the control unit 201 through the output device as an image, audio, or the like, for example. The control unit 201 may supply and output any desired information, such as control results and the like, for example, to the output unit 204.

The imaging processing unit 202 includes an optical system 221, a sensor unit 222, a RAW processing unit 223, a YUV processing unit 224, a reduced image generation unit 225, an image information addition unit 226, a 3D information processing unit 227, a hash processing unit 228, a signature control unit 229, a signature generation unit 230, an image file generation unit 231, an image file recording unit 232, and an image file supply unit 233.

The optical system 221 is constituted by optical elements such as lenses, mirrors, filters, aperture stops, and the like, for example, which exert predetermined effects on light rays from a subject and guide the light rays to the sensor unit 222. In other words, light rays from the subject are incident on the sensor unit 222 through the optical system 221.

The sensor unit 222 performs processing pertaining to photoelectric conversion. The sensor unit 222 includes an image sensor 241 and a 3D information sensor 242. For example, the sensor unit 222 may generate captured images, 3D information, and the like using the light rays from the subject incident through the optical system 221.

The image sensor 241 performs processing pertaining to the generation of captured images. The image sensor 241 has a pixel array in which pixels, each having a photoelectric conversion element, are arranged in a matrix. For example, the image sensor 241 may receive the light rays from the subject incident through the optical system 221 on the pixel array and generate a captured image (a RAW image or a Joint Photographic Experts Group (JPEG) image generated from the RAW image) through photoelectric conversion. In other words, the image sensor 241 captures an image of the subject and generates a captured image of the subject, and can therefore also be called a "captured image generation unit". Additionally, the image sensor 241 may supply the generated captured image to the RAW processing unit 223.

The 3D information sensor 242 detects distance-related information, for a plurality of locations within the captured image obtained by the image sensor 241, along the same optical axis as the captured image, and generates the 3D information. In other words, the 3D information sensor 242 can also be called a "3D information generation unit". For example, the 3D information sensor 242 includes a predetermined sensor device that detects the distance-related information. The 3D information sensor 242 receives the light rays from the subject incident through the optical system 221 on that sensor device, detects the distance-related information, and generates the 3D information.

Here, "the same optical axis" means that the light rays from the subject incident on the 3D information sensor 242 pass through the optical system 221 through which the light rays from the subject incident on the image sensor 241 pass. In other words, this means that the paths of the light rays incident on the image sensor 241 and the light rays incident on the 3D information sensor 242 are the same at least from the subject to the sensor unit 222. Detecting the captured image and the distance-related information on the same optical axis in this manner makes it difficult to perform trick photography such as, for example, capturing a facial photograph or the like and detecting the distance to a person other than the subject in the facial photograph. In other words, it is highly likely that the subject of the captured image and the subject of the 3D information are the same as each other.

The "distance-related information" may also be information indicating a distance from the imaging device 111 (the 3D information sensor 242) to the subject, or information for deriving that distance. For example, the distance-related information may include a depth map, phase difference data, Time of Flight (ToF) data, a collection of parallax images, or the like.

The 3D information sensor 242 supplies the generated 3D information to the 3D information processing unit 227.

Although the image sensor 241 and the 3D information sensor 242 are configured as separate entities in Fig. 7, the image sensor 241 and the 3D information sensor 242 may be integrated, and the image sensor 241 may also serve as the 3D information sensor 242. For example, if the distance-related information is ToF data, the 3D information sensor 242 may be constituted by a ToF sensor, separate from the image sensor 241, that measures the distance through the ToF method. Additionally, if the distance-related information is phase difference data, the 3D information sensor 242 may be constituted by image plane phase detection pixels formed in an effective pixel region of the pixel array of the image sensor 241. An image plane phase detection pixel is a pixel used in a phase difference-based focus (autofocus) function, and is capable of detecting phase difference data. In this case, the image sensor 241 and the 3D information sensor 242 are formed as an integrated entity. Additionally, the 3D information sensor 242 may be constituted by a phase difference sensor, separate from the image sensor 241, that detects phase difference data. If the distance-related information is a collection of parallax images generated by 3D sweep panoramic photography or the like, the image sensor 241 also serves as the 3D information sensor 242. In other words, in this case, the image sensor 241 generates the captured image and the 3D information, and the 3D information sensor 242 may be omitted.

Unless mentioned otherwise, the following will describe an example in which the 3D information sensor 242 is constituted by image plane phase detection pixels. In other words, a case where phase difference data is detected by the 3D information sensor 242 as the distance-related information will be described as an example.

The RAW processing unit 223 performs processing pertaining to RAW images. For example, the RAW processing unit 223 may obtain a captured image supplied from the image sensor 241 (a RAW image). The RAW processing unit 223 may perform predetermined processing on the RAW image. The processing may be any type of processing. For example, the processing may be white balance correction or the like. The RAW processing unit 223 may supply the processed RAW image to the YUV processing unit 224.

The YUV processing unit 224 performs processing pertaining to the generation of YUV images. For example, the YUV processing unit 224 may obtain a RAW image supplied from the RAW processing unit 223. The YUV processing unit 224 may convert that RAW image into a YUV image. The YUV processing unit 224 may encode that YUV image and convert the YUV image into a JPEG image. The YUV processing unit 224 may supply the generated JPEG image to the reduced image generation unit 225. Note that when the image sensor 241 outputs a JPEG image as the captured image, the RAW processing unit 223 and the YUV processing unit 224 may be omitted, and the image sensor 241 may supply a JPEG image to the reduced image generation unit 225.

The reduced image generation unit 225 performs processing pertaining to the generation of reduced images. For example, the reduced image generation unit 225 may obtain a JPEG image supplied from the YUV processing unit 224. The reduced image generation unit 225 may generate a reduced image of that JPEG image. The original JPEG image of the reduced image will also be referred to as a "source image" in the following. Any method may be used to generate the reduced image. For example, the reduced image generation unit 225 may generate a reduced image by thinning out some pixel values in the source image. The reduced image generation unit 225 may generate the reduced image by combining pixel values for each of predetermined partial areas of the source image to reduce the number of pixels. The reduced image generation unit 225 may generate the reduced image in view of all the pixels in the source image. If the number of taps is insufficient, the reduced image generation unit 225 may generate the reduced image at the desired reduced magnification by repeating the reduction at a magnification that provides the sufficient number of taps. The reduced image generation unit 225 supplies the generated reduced image to the image information addition unit 226 along with the source image (the JPEG image).

The image information addition unit 226 performs processing pertaining to the addition of image information. For example, the image information addition unit 226 may obtain the source image and the reduced image supplied from the reduced image generation unit 225. The image information addition unit 226 may generate image information, which is information pertaining to the obtained source image. The image information addition unit 226 may associate the generated image information with the source image. In other words, the image information addition unit 226 may generate the image information as metadata of the source image. The image information addition unit 226 may supply the generated image information to the hash processing unit 228 along with the source image and the reduced image.

The 3D information processing unit 227 performs processing on the 3D information. For example, the 3D information processing unit 227 may obtain the 3D information supplied from the 3D information sensor 242. The 3D information processing unit 227 may perform predetermined processing on the obtained 3D information. For example, the 3D information processing unit 227 may supply the obtained 3D information to the hash processing unit 228. In addition, if the signature is not generated, the 3D information processing unit 227 may reduce the resolution of the obtained 3D information, and supply the low-resolution 3D information to the hash processing unit 228, on the basis of control by the signature control unit 229. If the signature is generated, the 3D information processing unit 227 may skip reducing the resolution of the 3D information, and supply the obtained 3D information to the hash processing unit 228, on the basis of control by the signature control unit 229. The 3D information processing unit 227 can also be called a "3D information resolution setting unit". The 3D information processing unit 227 may also determine whether the subject (rangefinding target) of the obtained 3D information is a plane, and supply the result of the determination to the signature control unit 229. The 3D information processing unit 227 can also be called a "plane determination unit".

The hash processing unit 228 performs processing pertaining to the generation of hashes. For example, the hash processing unit 228 may obtain the source image, the reduced image, and the image information supplied from the image information addition unit 226. The hash processing unit 228 may obtain the 3D information supplied from the 3D information processing unit 227. The hash processing unit 228 may generate a hash using the source image, the image information, and the 3D information. The hash processing unit 228 may supply the generated hash to the signature generation unit 230 along with the source image, the reduced image, the image information, and the 3D information.

The hash processing unit 228 may be driven under the control of the signature control unit 229. In other words, the hash processing unit 228 may generate a hash as described above when the signature control unit 229 instructs a hash to be generated, and may skip generating the hash when the signature control unit 229 does not instruct a hash to be generated. If the generation of the hash is skipped, the hash processing unit 228 may supply the obtained information (e.g., the source image, the reduced image, the image information, the 3D information, and the like) to the signature generation unit 230.

The signature control unit 229 performs processing pertaining to the control of signatures. For example, the signature control unit 229 may control whether to generate a signature on the basis of instructions from a user, an application, or the like, input through the control unit 201. The signature control unit 229 may control whether to generate a signature on the basis of a result of determining whether the subject (the rangefinding target) of the 3D information supplied from the 3D information processing unit 227 is a plane. For example, the signature control unit 229 may perform control to skip generating a signature when the subject (the rangefinding target) of the 3D information is determined to be a plane. The signature control unit 229 may perform control to generate a signature when the subject (the rangefinding target) of the 3D information is determined not to be a plane. In this control, the signature control unit 229 may control whether to generate the signature by controlling the hash processing unit 228 and the signature generation unit 230. For example, when performing control to skip the generation of a signature, the signature control unit 229 may cause the hash processing unit 228 to skip the generation of a hash, and may cause the signature generation unit 230 to skip the generation of a signature. When performing control to generate a signature, the signature control unit 229 may cause the hash processing unit 228 to generate a hash, and may cause the signature generation unit 230 to generate a signature. The signature control unit 229 may supply control information indicating whether to generate the signature to the 3D information processing unit 227.

The signature generation unit 230 performs processing pertaining to the generation of signatures. For example, the signature generation unit 230 may obtain the hash supplied from the hash processing unit 228 and the information used to generate the hash (e.g., the source image, the reduced image, the image information, the 3D information, and the like). The signature generation unit 230 may encrypt the obtained hash using the private key and generate a signature (digital signature). In other words, the signature generation unit 230 may generate a signature of information including at least the source image and the 3D information. The signature generation unit 230 can therefore also be called a "signature generation unit". The signature generation unit 230 may supply the generated signature to the image file generation unit 231 along with information corresponding to the signature (e.g., the source image, the reduced image, the image information, the 3D information, and the like).

The signature generation unit 230 may be driven under the control of the signature control unit 229. For example, when the signature control unit 229 has instructed a signature to be generated, the signature generation unit 230 may generate a signature as described above. When the signature control unit 229 has not instructed a signature to be generated, the signature generation unit 230 may skip generating the signature. If the generation of the signature is skipped, the signature generation unit 230 may supply the information supplied from the hash processing unit 228 (e.g., the source image, the reduced image, the image information, the 3D information, and the like) to the image file generation unit 231.

The image file generation unit 231 performs processing related to the generation of image files. For example, the image file generation unit 231 may obtain the information supplied from the signature generation unit 230 (e.g., the source image, the reduced image, the image information, the 3D information, the signature, and the like). The image file generation unit 231 may generate the image file in a predetermined format and store the obtained information (e.g., the source image, the reduced image, the image information, the 3D information, the signature, and the like) in that image file. The image file generation unit 231 may also store the encrypted limited public key in the image file. The image file generation unit 231 may supply that image file to the image file recording unit 232. The image file generation unit 231 may also supply that image file to the image file supply unit 233.

The image file recording unit 232 performs processing pertaining to the recording of image files. The image file recording unit 232 has a drive that drives, writes to, and reads from a removable recording medium such as a magnetic disk, an optical disk, a magneto-optical disk, or a semiconductor memory, for example. For example, the image file recording unit 232 may obtain the image file supplied from the image file generation unit 231. The image file recording unit 232 may record the obtained image file on the removable recording medium through the drive.

The image file supply unit 233 performs processing pertaining to the supply of image files. The image file supply unit 233 has a communication function for communicating with the verification device 112 over the network 110. For example, the image file supply unit 233 may obtain the image file supplied from the image file generation unit 231. The image file supply unit 233 may supply the obtained image file to the verification device 112 using the stated communication function.

### <Verification Device>

The verification device 112 is constituted by an information processing device having an image display function, such as a smartphone, a tablet terminal, a laptop personal computer, a desktop personal computer, a specialized computer, or a server, for example. The verification device 112 may be constituted by a single device (electronic device), or may be constituted by a plurality of devices (electronic devices). The verification device 112 will be described as being constituted by a single device (electronic device) in the following.

Fig. 8 is a block diagram illustrating an example of the configuration of the verification device 112 serving as one aspect of an image processing device to which the present technique is applied.

Note that Fig. 8 illustrates the main processing units, data flows, and the like, and the items illustrated in Fig. 8 are not necessarily all the items. In other words, the verification device 112 may include processing units not illustrated as blocks in Fig. 8, and processing and data flows not indicated as arrows or the like in Fig. 8.

As illustrated in Fig. 8, the verification device 112 includes an image file obtainment unit 311, a user-level image verification unit 312, a limited public key obtainment unit 313, a limited public key decrypting unit 314, a high-level image verification unit 315, and a display unit 316.

The image file obtainment unit 311 performs processing pertaining to the obtainment of image files. The image file obtainment unit 311 has a communication function for communicating with the imaging device 111 over the network 110. For example, the image file obtainment unit 311 may obtain an image file supplied from the imaging device 111 using the stated communication function. The image file obtainment unit 311 may supply the obtained image file to the user-level image verification unit 312. The image file obtainment unit 311 may also supply the image file to the limited public key decrypting unit 314.

The user-level image verification unit 312 executes processing pertaining to the user-level image verification. For example, the user-level image verification unit 312 may obtain an image file supplied from the image file obtainment unit 311. The user-level image verification unit 312 may execute the user-level image verification process using the history confirmation signature, the user public key, and the like stored in the obtained image file. The user-level image verification processing is verification processing for confirming the history of edits to the image stored in the image file. The user-level image verification unit 312 may supply information indicating the result of the user-level image verification (the result of confirming the history) to the display unit 316.

The limited public key obtainment unit 313 executes processing pertaining to obtainment of the limited public key. For example, the limited public key obtainment unit 313 has a communication function for communicating with the server 113 over the network 110. For example, the limited public key obtainment unit 313 may request the limited public key from the server 113 using the stated communication function. At that time, the limited public key obtainment unit 313 may perform authentication processing for communicating with the server 113 and causing the verification device 112 to authenticate the server 113. The limited public key obtainment unit 313 may obtain the limited public key supplied from the server 113 in response to that request using the stated communication function. The limited public key may be encrypted. The limited public key obtainment unit 313 may supply the obtained limited public key (the encrypted limited public key) to the limited public key decrypting unit 314.

The limited public key decrypting unit 314 performs processing pertaining to decryption of the encrypted limited public key. For example, when the limited public key is supplied from the limited public key obtainment unit 313, the limited public key decrypting unit 314 may obtain that limited public key. The limited public key decrypting unit 314 may obtain an image file from the image file obtainment unit 311. If the limited public key obtained from the limited public key obtainment unit 313 is encrypted, the limited public key decrypting unit 314 may decrypt the encrypted limited public key. The limited public key decrypting unit 314 may supply the limited public key obtained from the decrypting to the high-level image verification unit 315 along with the image file.

If the "encrypted limited public key" is stored in the image file obtained from the image file obtainment unit 311, the limited public key decrypting unit 314 may extract the encrypted limited public key. The limited public key decrypting unit 314 may then decrypt the extracted "encrypted limited public key". The limited public key decrypting unit 314 may supply the limited public key obtained from the decrypting to the high-level image verification unit 315 along with the image file.

The high-level image verification unit 315 executes processing pertaining to the high-level image verification. For example, the high-level image verification unit 315 may obtain the limited public key and the image file supplied from the limited public key decrypting unit 314. The high-level image verification unit 315 may execute the high-level image verification processing using the obtained limited public key, the tampering detection signature stored in the image file, and the like. The high-level image verification processing is verification processing for detecting whether the captured image stored in the image file has been tampered with. The high-level image verification unit 315 may supply information indicating the result of the high-level image verification (the result of the tampering detection) to the display unit 316.

The display unit 316 executes processing pertaining to the display of information. The display unit 316 includes an image display device such as a liquid crystal monitor or the like, for example. Any device capable of displaying images may be used as the image display device. For example, the display unit 316 may obtain information indicating the result of the user-level image verification supplied from the user-level image verification unit 312. The display unit 316 may generate image information for displaying the obtained information and display the image information using the image display device. Additionally, the display unit 316 may obtain information indicating the result of the high-level image verification supplied from the high-level image verification unit 315. The display unit 316 may generate image information for displaying the obtained information and display the image information using the image display device.

### <Server>

The server 113 may be constituted by, for example, a single information processing device, or may be constituted by a plurality of information processing devices. The server 113 may also be implemented as, for example, cloud computing for processing shared among a plurality of devices over a network (i.e., a cloud server).

Fig. 9 is a block diagram illustrating an example of the configuration of the server 113 serving as one aspect of an image processing device to which the present technique is applied.

Note that Fig. 9 illustrates the main processing units, data flows, and the like, and the items illustrated in Fig. 9 are not necessarily all the items. In other words, the server 113 may include processing units not illustrated as blocks in Fig. 9, and processing and data flows not indicated as arrows or the like in Fig. 9.

As illustrated in Fig. 9, the server 113 includes a limited public key management unit 411, a limited public key providing unit 412, and an authentication unit 413.

The limited public key management unit 411 executes processing pertaining to management of the limited public key. For example, the limited public key management unit 411 may have any desired type of storage medium, and may hold and manage the limited public key corresponding to the first private key used by the imaging device 111 in that storage medium. When the limited public key is requested by the limited public key providing unit 412, the limited public key management unit 411 may read out the requested limited public key from the storage medium and supply that limited public key to the limited public key providing unit 412 that made the request.

The limited public key providing unit 412 performs processing pertaining to providing the limited public key. For example, the limited public key providing unit 412 has a communication function for communicating with the verification device 112 over the network 110. For example, the limited public key providing unit 412 may accept a request for the limited public key supplied from the verification device 112 through that communication. The limited public key providing unit 412 may make a request to the limited public key management unit 411 for the limited public key specified in the accepted request.

The limited public key providing unit 412 may accept a request from the verification device 112 authenticated by the authentication unit 413. In other words, the limited public key providing unit 412 may obtain information indicating the result of the authentication of the verification device 112, supplied from the authentication unit 413. If the authentication results in the verification device 112 being authenticated, the limited public key providing unit 412 may accept the request for the limited public key supplied by the verification device 112. The limited public key providing unit 412 may then make a request to the limited public key management unit 411 for the limited public key specified in the accepted request.

The limited public key providing unit 412 may also obtain the limited public key supplied from the limited public key management unit 411. The limited public key providing unit 412 may supply the obtained limited public key to the verification device 112 over the network 110.

Note that the limited public key supplied to the verification device 112 may be encrypted. In other words, the limited public key providing unit 412 may encrypt the obtained limited public key and supply the encrypted limited public key to the verification device 112. The limited public key management unit 411 may also manage the encrypted limited public key and supply that key to the limited public key providing unit 412. In that case, the limited public key providing unit 412 may obtain the encrypted limited public key and supply that key to the verification device 112.

The authentication unit 413 executes processing pertaining to the authentication of the verification device 112. For example, the authentication unit 413 has a communication function for communicating with the verification device 112 over the network 110. For example, the authentication unit 413 may communicate with the verification device 112 and perform authentication processing for the verification device 112. The authentication unit 413 may supply information indicating the authentication result to the limited public key providing unit 412.

### <Application of Present Technique>

The various methods (the present technique) described above in <3. Storing Plurality of Signatures> may be applied in (each device of) the image processing system 100 configured in this manner. For example, Method 1 described above may be applied. In other words, a plurality of signatures corresponding to public keys having different ranges of publication may be stored in a file.

For example, in the imaging device 111, the hash processing unit 228 may generate a first hash corresponding to a first signature (the tampering detection signature) and a second hash corresponding to a second signature (the history confirmation signature) using a captured image and metadata. The signature generation unit 230 may generate the first signature using a first private key and the first hash. The signature generation unit 230 may generate the second signature using a second private key and the second hash. The image file generation unit 231 may generate a file storing the captured image, the metadata, the first signature, and the second signature (an image file). Note that the first private key may correspond to the limited public key, which is publicized only to a first entity having specific privileges other than user privileges. The second private key, meanwhile, may correspond to the user public key, which is also publicized to a second entity having the user privileges.

The signature generation unit 230 may also hold the first private key and the second private key in advance. The hash processing unit 228 may generate the first hash using the captured image and the metadata, and the signature generation unit 230 may generate the first signature (the tampering detection signature) using the first private key and the first hash. The hash processing unit 228 may then generate the second hash using the captured image, the metadata, and the first signature, and the signature generation unit 230 may generate the second signature using the second private key and the second hash.

Additionally, the image sensor 241 may capture an image of a subject and generate a captured image. The hash processing unit 228 may then generate the first hash and the second hash using the generated captured image and the metadata.

Additionally, the image file generation unit 231 may store the first signature (the tampering detection signature) in a metadata area, of the file, where the metadata is stored. The image file generation unit 231 may also store the encrypted limited public key in the file.

For example, in the verification device 112, the image file obtainment unit 311 may obtain a file storing an image, metadata, the first signature (the tampering detection signature), and the second signature (the history confirmation signature) (an image file). The high-level image verification unit 315 may verify the authenticity of the image using the limited public key publicized only to a first entity having specific privileges other than user privileges, the image, the metadata, and the first signature.

In the verification device 112, the limited public key decrypting unit 314 may decrypt the encrypted limited public key. The high-level image verification unit 315 may then verify the authenticity of the image using the decrypted limited public key, the image, the metadata, and the first signature.

For example, in the verification device 112, the limited public key obtainment unit 313 may obtain the "encrypted limited public key" supplied from another device. The limited public key decrypting unit 314 may decrypt the obtained "encrypted limited public key". The limited public key decrypting unit 314 may also extract the encrypted limited public key from the image file and decrypt the limited public key. The high-level image verification unit 315 may then verify the authenticity of the image using the decrypted limited public key, the image, the metadata, and the first signature.

In addition, Method 1-1 described above may be applied. In other words, the targets of the respective signatures may have different ranges from each other. For example, in the imaging device 111, the hash processing unit 228 may generate the first hash for a first range within the captured image and the metadata. The hash processing unit 228 may generate the second hash for a second range broader than the first range. This first range may be a range excluding some data within the captured image and the metadata. Additionally, the second range described above may be the entirety of the captured image and the metadata. The some data may be data pertaining to predetermined processing on the captured image. For example, the data pertaining to the predetermined processing may include at least one piece of data pertaining to rotation of the image, data pertaining to a rating (star-based rating) of the image, or IPTC metadata.

In addition, Method 1-2 described above may be applied. In other words, the hash of the tampering detection signature may be a multihash. For example, in the imaging device 111, the hash processing unit 228 may generate the first hash as a multihash constituted by a plurality of mutually-independent hashes. The hash processing unit 228 may also generate the second hash as a multihash.

In addition, Method 1-2-1 described above may be applied. In other words, the way in which the hashes of the tampering detection signature are divided may be at a finer level than the hashes for the history signature use. In other words, the first hash corresponding to the tampering detection signature may be constituted by more hashes than the second hash. For example, in the imaging device 111, the hash processing unit 228 may generate the first hash as a multihash constituted by more hashes than the second hash.

In addition, Method 1-3 described above may be applied. In other words, the tampering detection signature may be stored in an area propagated by the history. For example, in the imaging device 111, the image file generation unit 231 may store the first signature (the tampering detection signature) in an area, within the metadata area, that is propagated by the history. The image file generation unit 231 may store the first signature (the tampering detection signature) in the vendor extension area within the metadata area.

In addition, Method 1-3-1 described above may be applied. In other words, the hash of the tampering detection signature may be a multihash, and an area that can be dropped (or an area that is dropped) in the history may be hashed independently from others. In other words, for an area to be removed or an area that may be removed by editing, a hash may be generated independently from other areas. For example, in the imaging device 111, the hash processing unit 228 may generate, independently from other hashes, a deletion hash corresponding to an area, of the captured image and the metadata, that is deleted in the history, and generate the first hash as a multihash constituted by a plurality of mutually-independent hashes including the deletion hash.

Configuring the devices in this manner makes it possible for high-level image verification and user-level image verification to be implemented. For example, it is possible to handle both use cases that provide strong tampering detection by limiting signature verification, and use cases that allow other companies to verify signatures and maintain editing histories. That is, a drop in the usability (ease of use) of the captured image can be suppressed.

### <Flow of Imaging Processing>

An example of the flow of the imaging processing executed by the imaging device 111 will be described with reference to the flowchart in Fig. 10.

When the imaging processing starts, in step S101, the control unit 201 turns on the power of the imaging processing unit 202 and starts a preview.

In step S102, the control unit 201 turns on a digital signature mode as an operating mode of the imaging processing unit 202. In other words, the control unit 201 sets the operating mode of the imaging processing unit 202 to a mode for storing digital signatures in image files.

In step S103, the sensor unit 222 (the image sensor 241 and the 3D information sensor 242) captures an image of a subject, and obtains a RAW image and 3D information on the same optical axis.

In step S104, the RAW processing unit 223 performs correction processing such as white balance adjustment on the RAW image. The YUV processing unit 224 converts the corrected RAW image into a YUV image. The YUV processing unit 224 also encodes that YUV image and generates a JPEG image. The reduced image generation unit 225 generates a reduced image in which the JPEG image (the source image) is reduced. Any method may be used to generate the reduced image. The reduced image may also be of any desired size. For example, the reduced image may be what is known as a thumbnail, or what is known as a screennail. The image information addition unit 226 generates image information pertaining to the source image or the reduced image as metadata. The 3D information processing unit 227 performs predetermined processing on the 3D information, such as reducing the resolution of the 3D information, for example.

In step S105, the hash processing unit 228 generates the first hash using the captured image, the metadata, and the like.

In step S106, the signature generation unit 230 generates the tampering detection signature by encrypting the generated first hash using the first private key.

In step S107, the hash processing unit 228 generates the second hash using the captured image, the metadata, and the like.

In step S108, the signature generation unit 230 generates the history confirmation signature by encrypting the generated second hash using the second private key.

In step S109, the image file generation unit 231 generates an image file that stores the captured image, the tampering detection signature, the history confirmation signature, and the like. At that time, the image file generation unit 231 may store the metadata, a certificate, and the like of the captured image in the image file. The image file generation unit 231 may also store the encrypted limited public key in the image file.

In step S110, the image file recording unit 232 records the image file.

In step S111, the image file supply unit 233 supplies the image file to the verification device 112.

When step S111 ends, the imaging processing ends.

Executing the processing in this manner makes it possible for the imaging device 111 to implement high-level image verification and user-level image verification to be implemented. For example, the imaging device 111 can handle both use cases that provide strong tampering detection by limiting signature verification, and use cases that allow other companies to verify signatures and maintain editing histories. That is, the imaging device 111 can suppress a drop in the usability (ease of use) of the captured image.

### <Flow of User-Level Image Verification Processing>

An example of the flow of the user-level image verification processing executed by the verification device 112 will be described with reference to the flowchart illustrated in Fig. 11.

When the user-level image verification processing is started, in step S201, the image file obtainment unit 311 obtains an image file. A captured image generated by an imaging device (the first image processing device), metadata of the captured image, a first signature (the tampering detection signature), and a second signature (the history confirmation signature) are stored in the image file.

In step S202, the user-level image verification unit 312 extracts the user public key from the image file.

In step S203, the user-level image verification unit 312 verifies the history confirmation signature stored in the image file using the extracted user public key.

In step S204, the user-level image verification unit 312 determines whether the result of the verification indicates that the history confirmation signature is correct. If the history confirmation signature is determined to be valid, the sequence moves to step S205.

In step S205, the display unit 316 makes a notification that no tampering has been detected by displaying image information indicating the verification result. Once the processing of step S205 ends, the user-level image verification processing ends.

If in step S204 the history confirmation signature is determined to be invalid, the sequence moves to step S206.

In step S206, the display unit 316 makes a notification that tampering has been detected by displaying image information indicating the verification result. Once the processing of step S206 ends, the user-level image verification processing ends.

### <Flow of High-Level Image Verification Processing>

An example of the flow of the high-level image verification processing executed by the verification device 112 will be described with reference to the flowchart illustrated in Fig. 12.

When the high-level image verification processing is started, in step S221, the image file obtainment unit 311 obtains an image file. A captured image generated by an imaging device (the first image processing device), metadata of the captured image, a first signature (the tampering detection signature), and a second signature (the history confirmation signature) are stored in the image file.

In step S222, the limited public key obtainment unit 313 obtains the encrypted limited public key from the server 113.

In step S223, the limited public key decrypting unit 314 decrypts the encrypted limited public key.

In step S224, the high-level image verification unit 315 verifies the tampering detection signature stored in the image file using the limited public key.

In step S225, the high-level image verification unit 315 determines whether the result of the verification indicates that the tampering detection signature is correct. If the tampering detection signature is determined to be valid, the sequence moves to step S226.

In step S226, the display unit 316 makes a notification that no tampering has been detected by displaying image information indicating the verification result. Once the processing of step S226 ends, the high-level image verification processing ends.

If in step S225 the tampering detection signature is determined to be invalid, the sequence moves to step S227.

In step S227, the display unit 316 makes a notification that tampering has been detected by displaying image information indicating the verification result. Once the processing of step S227 ends, the high-level image verification processing ends.

### <Flow of High-Level Image Verification Processing>

If the captured image is edited and a history thereof is stored in the image file, the high-level image verification process is executed as illustrated in the flowchart in Fig. 13.

When the high-level image verification processing is started, in step S241, the image file obtainment unit 311 obtains an image file. A captured image generated by an imaging device (the first image processing device), metadata of the captured image, a first signature (the tampering detection signature), and a second signature (the history confirmation signature) are stored in the image file.

In step S242, the image file obtainment unit 311 extracts a captured image part from the image file.

In step S243, the limited public key obtainment unit 313 obtains the encrypted limited public key from the server 113.

In step S244, the limited public key decrypting unit 314 decrypts the encrypted limited public key.

In step S245, the high-level image verification unit 315 verifies the tampering detection signature using the captured image part extracted from the image file and the limited public key.

In step S246, the high-level image verification unit 315 determines whether the result of the verification indicates that the tampering detection signature is correct. If the tampering detection signature is determined to be valid, the sequence moves to step S247.

In step S247, the display unit 316 makes a notification that no tampering has been detected by displaying image information indicating the verification result. Once the processing of step S247 ends, the high-level image verification processing ends.

If in step S246 the tampering detection signature is determined to be invalid, the sequence moves to step S248.

In step S248, the display unit 316 makes a notification that tampering has been detected by displaying image information indicating the verification result. Once the processing of step S248 ends, the high-level image verification processing ends.

Executing the processing in this manner makes it possible for the verification device 112 to implement high-level image verification and user-level image verification to be implemented. For example, the verification device 112 can handle both use cases that provide strong tampering detection by limiting signature verification, and use cases that allow other companies to verify signatures and maintain editing histories. That is, the verification device 112 can suppress a drop in the usability (ease of use) of the captured image.

### <Flow of High-Level Image Verification Processing>

Note that in the high-level image verification processing illustrated in Fig. 12, the encrypted limited public key may be stored in an image file and provided to the verification device 112. The flow of the high-level image verification processing in that case will be described with reference to the flowchart in Fig. 14.

When the high-level image verification processing is started, in step S261, the image file obtainment unit 311 obtains an image file. A captured image generated by an imaging device (the first image processing device), metadata of the captured image, a first signature (the tampering detection signature), and a second signature (the history confirmation signature) are stored in the image file.

In step S262, the limited public key decrypting unit 314 extracts the encrypted limited public key from the image file.

The processing of step S263 to step S267 is executed in the same manner as the processing of step S223 to step S227 (Fig. 12). Once the processing of step S266 or step S267 ends, the high-level image verification processing ends.

### <Flow of High-Level Image Verification Processing>

Similarly, in the high-level image verification processing illustrated in Fig. 13, the encrypted limited public key may be stored in an image file and provided to the verification device 112. The flow of the high-level image verification processing in that case will be described with reference to the flowchart in Fig. 15.

When the high-level image verification processing is started, in step S281, the image file obtainment unit 311 obtains an image file. A captured image generated by an imaging device (the first image processing device), metadata of the captured image, a first signature (the tampering detection signature), and a second signature (the history confirmation signature) are stored in the image file.

In step S282, the image file obtainment unit 311 extracts a captured image part from the image file.

In step S283, the limited public key decrypting unit 314 extracts the encrypted limited public key from the image file.

The processing of step S284 to step S288 is executed in the same manner as the processing of step S244 to step S248 (Fig. 13). Once the processing of step S287 or step S288 ends, the high-level image verification processing ends.

### <Limited Public Key Supply Processing>

An example of the flow of the limited public key supply processing executed by the server 113 will be described with reference to the flowchart illustrated in Fig. 16.

When the limited public key supply processing is started, in step S301, the authentication unit 413 performs authentication processing.

When the authentication processing is successfully completed and the verification device 112 is authenticated, in step S302, the limited public key providing unit 412 accepts a request for the limited public key from the authenticated verification device 112.

In step S303, the limited public key providing unit 412 obtains the requested limited public key from the limited public key management unit 411.

In step S304, the limited public key providing unit 412 encrypts the obtained limited public key and supplies the encrypted limited public key to the verification device 112 that made the request.

Once the processing of step S304 ends, the limited public key supply processing ends.

Executing the processing in this manner makes it possible for the server 113 to provide the limited public key to the verification device 112. Accordingly, the server 113 can suppress a drop in the usability (ease of use) of the captured image.

### <5. Supplementary Notes>

### <Other>

The examples (methods) of the present technique described above may be applied in combination with other examples (methods) as appropriate as long as no conflicts arise as a result thereof. The examples of the present technique described above may also be applied in combination with other techniques aside from those described above.

### <Computer>

The series of processing described above can be executed by hardware, or can be executed by software. When the series of steps of processing is executed by software, a program of the software is installed in a computer. Here, the computer includes, for example, a computer built in dedicated hardware and a general-purpose personal computer in which various programs are installed to be able to execute various functions.

Fig. 17 is a block diagram illustrating an example of the hardware configuration of a computer that executes the series of processing described above according to a program.

In a computer 900 illustrated in Fig. 17, a Central Processing Unit (CPU) 901, Read Only Memory (ROM) 902, and Random Access Memory (RAM) 903 are connected to each other by a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, and a non-volatile memory. The communication unit 914 includes, for example, a network interface. The drive 915 drives a removable medium 921 such as a magnetic disk, an optical disc, a magneto-optical disk, semiconductor memory, or the like.

In the computer that has the above configuration, for example, the CPU 901 performs the above-described series of processes by loading a program stored in the storage unit 913 to the RAM 903 via the input/output interface 910 and the bus 904 and executing the program. Data and the like necessary for the CPU 901 to execute the various kinds of processing is also stored as appropriate in the RAM 903.

The program executed by the computer can be recorded in, for example, the removable medium 921 as a package medium or the like and provided in such a form. In this case, the program may be installed in the storage unit 913 via the input/output interface 910 by inserting the removable medium 921 into the drive 915.

Additionally, the program may also be provided via a wired or wireless transmission medium such as a local area network, the Internet, or digital satellite broadcasting. In this case, the program can be received by the communication unit 914 and installed in the storage unit 913.

In addition, this program can be installed in advance in the ROM 902, the storage unit 913, or the like.

### <Applications of Present Technique>

The present technique can be applied in any coding/decoding methods.

The present technique can be applied in any desired configuration. For example, the present technique can be applied in a variety of electronic devices.

Additionally, for example, the present technique can be implemented as a configuration of a part of a device such as a processor (e.g., a video processor) of a system Large Scale Integration (LSI) circuit, a module (e.g., a video module) using a plurality of processors or the like, a unit (e.g., a video unit) using a plurality of modules or the like, or a set (e.g., a video set) with other functions added to the unit.

For example, the present technique can also be applied in a network system constituted by a plurality of devices. The present technique may be implemented as, for example, cloud computing for processing shared among a plurality of devices over a network. For example, the present technique may be implemented in a cloud service that provides services pertaining to images (moving images) to any terminals such as a computer, an Audio Visual (AV) device, a mobile information processing terminal, and an Internet of Things (IoT) device or the like.

Note that herein, "system" means a set of a plurality of constituent elements (devices, modules (components), or the like), and it does not matter whether all the constituent elements are provided in the same housing. Therefore, a plurality of devices contained in separate housings and connected over a network, and one device in which a plurality of modules are contained in one housing, are both "systems".

### <Fields and Applications in Which Present Technique Is Applicable>

A system, a device, a processing unit, or the like in which the present technique is applied can be used in any field, such as, for example, transportation, medical care, crime prevention, agriculture, livestock industry, mining, beauty, factories, home appliances, weather, nature monitoring, and the like. The application of the present technique can also be implemented as desired.

For example, the present technique can be applied in systems and devices used for providing content for viewing and the like. In addition, for example, the present technique can be applied in systems and devices used for transportation, such as traffic condition monitoring and autonomous driving control. Furthermore, for example, the present technique can be applied in systems and devices used for security. In addition, for example, the present technique can be applied to systems and devices used for automatically controlling machines and the like. Furthermore, for example, the present technique can be applied in systems and devices used for the agriculture and livestock industries. In addition, the present technique can also be applied, for example, in systems and devices for monitoring natural conditions such as volcanoes, forests, oceans, wildlife, and the like. Furthermore, for example, the present technique can be applied in systems and devices used for sports.

### <Other>

Note that the term "flag" as used herein refers to information used to identify a plurality of states, and includes not only information used when identifying two states, i.e., true (1) or false (0), but also information capable of identifying three or more states. Accordingly, the value this "flag" can take may be, for example, a binary value of 1 or 0, or three or more values. In other words, the number of bits constituting this "flag" can be set as desired, as one bit or multiple bits. Additionally, the identification information (including flags) is assumed to include not only the identification information in the bitstream, but also the difference information of the identification information relative to given reference information in the bitstream, and thus "flag" and "identification information" herein include not only that information, but also the difference information relative to that reference information.

Additionally various types of information (metadata and the like) pertaining to a captured image may be transmitted or recorded in any form as long as the information is associated with the captured image. Here, the term "associate" means, for example, to make one piece of data usable (linkable) for another piece of data when processing the other piece of data. In other words, data associated with each other may be grouped together as a single piece of data, or may be separate pieces of data. For example, information associated with encoded data (an image) may be transmitted over a different transmission path than the encoded data (the image). Additionally, for example, information associated with encoded data (an image) may be recorded in a different recording medium (or in a different recording area of the same recording medium) than the encoded data (the image). Note that this "association" may be for part of the data instead of the entirety of the data. For example, an image and information corresponding to the image may be associated with a plurality of frames, one frame, or any unit such as a part within the frame.

As used herein, a term such as "combining," "multiplexing," "adding," "integrating," "including," "storing," "pushing," "entering," or "inserting" means that a plurality of items are collected as one, for example, encoded data and metadata are collected as one piece of data, and means one method of the above-described "associating".

Additionally, the embodiments of the present technique are not limited to the above-described embodiments, and various modifications can be made without departing from the essential spirit of the present technique.

For example, configurations described as one device (or one processing unit) may be divided to be configured as a plurality of devices (or processing units). Conversely, configurations described as a plurality of devices (or processing units) in the foregoing may be collectively configured as one device (or one processing unit). Configurations other than those described above may of course be added to the configuration of each device (or each processing unit). Furthermore, part of the configuration of one device (or one processing unit) may be included in the configuration of another device (or another processing unit) as long as the configuration or operation of the entire system is substantially the same.

Additionally, for example, the program described above may be executed on any device. In this case, the device may have necessary functions (function blocks and the like) and may be capable of obtaining necessary information.

Additionally, for example, each step of a single flowchart may be executed by a single device, or may be executed cooperatively by a plurality of devices. Furthermore, if a single step includes a plurality of processes, the plurality of processes may be executed by a single device or shared by a plurality of devices. In other words, the plurality of kinds of processing included in the single step may be executed as processing for a plurality of steps. Conversely, processing described as a plurality of steps may be collectively executed as a single step.

Additionally, for example, the program executed by the computer may be such that the processing steps describing the program are executed in chronological order according to the order described herein, or are executed in parallel or individually at a necessary timing, such as in response to a call. That is, as long as no contradiction arises, the processing steps may be executed in an order different from the order described above. Furthermore, the processing steps describing the program may be executed in parallel with the processing of another program or may be executed in combination with the processing of the other program.

Additionally, for example, the multiple techniques related to the present technique can be implemented independently on their own, as long as no contradictions arise. Of course, any number of modes of the present technique may be used in combination. For example, part or all of the present technique described in any of the embodiments may be implemented in combination with part or all of the present technique described in the other embodiments. Furthermore, part or all of any of the above-described modes of the present technique may be implemented in combination with other techniques not described above.

The present technique can also be configured as follows.
(1) An image processing device including:
   a hash processing unit that generates a first hash corresponding to a first signature and a second hash corresponding to a second signature using a captured image and metadata;
   a signature generation unit that generates the first signature using a first private key and the first hash, and generates the second signature using a second private key and the second hash; and
   a file generation unit that generates a file storing the captured image, the metadata, the first signature, and the second signature,
   wherein the first private key corresponds to a limited public key publicized only to a first entity having specific privileges other than user privileges, and
   the second private key corresponds to a user public key also publicized to a second entity having the user privileges.
(2) The image processing device according to (1), further including:
   an image capturing unit that captures an image of a subject and generates the captured image,
   wherein the hash processing unit is configured to generate the first hash and the second hash using the captured image generated and the metadata.
(3) The image processing device according to (1) or (2),
   wherein the signature generation unit is configured to hold the first private key and the second private key in advance.
(4) The image processing device according to any of (1) to (3),
   wherein the hash processing unit is configured to generate the first hash using the captured image and the metadata,
   the signature generation unit is configured to generate the first signature using the first private key and the first hash,
   the hash processing unit is configured to generate the second hash using the captured image, the metadata, and the first signature, and
   the signature generation unit is configured to generate the second signature using the second private key and the second hash.
(5) The image processing device according to any of (1) to (4),
   wherein the hash processing unit is configured to generate the first hash for a first range within the captured image and the metadata, and generate the second hash for a second range broader than the first range.
(6) The image processing device according to (5),
   wherein the first range is a range excluding some data within the captured image and the metadata, and
   the second range is an entirety of the captured image and the metadata.
(7) The image processing device according to (6),
   wherein the some data is data pertaining to predetermined processing on the captured image.
(8) The image processing device according to (7),
   wherein the data pertaining to the predetermined processing includes at least one piece of data pertaining to rotation, data pertaining to a rating, or International Press Telecommunications Council (IPTC) metadata.
(9) The image processing device according to any of (1) to (8),
   wherein the hash processing unit is configured to generate the first hash as a multihash constituted by a plurality of mutually-independent hashes.
(10) The image processing device according to (9),
   wherein the hash processing unit is configured to generate the second hash as the multihash.
(11) The image processing device according to (9) or (10),
   wherein the hash processing unit is configured to generate the first hash as the multihash constituted by more hashes than the second hash.
(12) The image processing device according to any of (1) to (11),
   wherein the file generation unit is configured to store the first signature in a metadata area, of the file, that stores the metadata.
(13) The image processing device according to (12),
   wherein the file generation unit is configured to store the first signature in an area, within the metadata area, that is propagated by a history.
(14) The image processing device according to (13),
   wherein the file generation unit is configured to store the first signature in a vendor extension area within the metadata area.
(15) The image processing device according to (14),
   wherein the hash processing unit generates, independent from other hashes, a deletion hash corresponding to an area, of the captured image and the metadata, that is deleted in the history, and generates the first hash as a multihash constituted by a plurality of mutually-independent hashes including the deletion hash.
(16) The image processing device according to any of (1) to (15),
   wherein the file generation unit is configured to store the limited public key in an encrypted state in the file.
(17) An image processing method including:
   generating a first hash corresponding to a first signature and a second hash corresponding to a second signature using a captured image and metadata;
   generating the first signature using a first private key and the first hash, and
   generating the second signature using a second private key and the second hash; and
   generating a file storing the captured image, the metadata, the first signature, and the second signature,
   wherein the first private key corresponds to a limited public key publicized only to a first entity having specific privileges other than user privileges, and the second private key corresponds to a user public key also publicized to a second entity having the user privileges.
(18) An image processing device including:
   a file obtainment unit that obtains a file storing an image, metadata, a first signature, and a second signature; and
   a verification unit that verifies authenticity of the image using a limited public key publicized only to a first entity having specific privileges other than user privileges, the image, the metadata, and the first signature,
   wherein the first signature is a signature generated using a first private key corresponding to the limited public key, a captured image corresponding to the image, and metadata of the captured image, and
   the second signature is a signature generated using a second private key corresponding to a user public key also publicized to a second entity having the user privileges, the image, and the metadata.
(19) The image processing device according to (18), further including:
   a decrypting unit that decrypts the limited public key in an encrypted state,
   wherein the verification unit is configured to verify the authenticity of the image using the limited public key that has been decrypted, the image, the metadata, and the first signature.
(20) The image processing device according to (19), further including:
   a limited public key obtainment unit that obtains the limited public key in the encrypted state, the limited public key being supplied from another device,
   wherein the decrypting unit is configured to decrypt the limited public key in the encrypted state that has been obtained.
(21) The image processing device according to (19),
   wherein the decrypting unit is configured to extract the limited public key in the encrypted state from the file and decrypt the limited public key.
(22) An image processing method including:
   obtaining a file storing an image, metadata, a first signature, and a second signature; and
   verifying authenticity of the image using a limited public key publicized only to a first entity having specific privileges other than user privileges, the image, the metadata, and the first signature,
   wherein the first signature is a signature generated using a first private key corresponding to the limited public key, a captured image corresponding to the image, and metadata of the captured image, and
   the second signature is a signature generated using a second private key corresponding to a user public key also publicized to a second entity having the user privileges, the image, and the metadata.

### [Reference Signs List]

100 Image processing system
110 Network
111 Imaging device
112 Verification device
113 Server
201 Control unit
202 Imaging processing unit
221 Optical system
222 Sensor unit
228 Hash processing unit
229 Signature control unit
230 Signature generation unit
231 Image file generation unit
232 Image file recording unit
233 Image file supply unit
311 Image file obtainment unit
312 User-level image verification unit
313 Limited public key obtainment unit
314 Limited public key decrypting unit
315 High-level image verification unit
316 Display unit
411 Limited public key management unit
412 Limited public key providing unit
413 Authentication unit
900 Computer

## Claims

1. An image processing device comprising:
a hash processing unit that generates a first hash corresponding to a first signature and a second hash corresponding to a second signature using a captured image and metadata;
a signature generation unit that generates the first signature using a first private key and the first hash, and generates the second signature using a second private key and the second hash; and
a file generation unit that generates a file storing the captured image, the metadata, the first signature, and the second signature,
wherein the first private key corresponds to a limited public key publicized only to a first entity having specific privileges other than user privileges, and
the second private key corresponds to a user public key also publicized to a second entity having the user privileges.

2. The image processing device according to claim 1, further comprising:
an image capturing unit that captures an image of a subject and generates the captured image,
wherein the hash processing unit is configured to generate the first hash and the second hash using the captured image generated and the metadata.

3. The image processing device according to claim 1,
wherein the signature generation unit is configured to hold the first private key and the second private key in advance.

4. The image processing device according to claim 1,
wherein the hash processing unit is configured to generate the first hash using the captured image and the metadata,
the signature generation unit is configured to generate the first signature using the first private key and the first hash,
the hash processing unit is configured to generate the second hash using the captured image, the metadata, and the first signature, and
the signature generation unit is configured to generate the second signature using the second private key and the second hash.

5. The image processing device according to claim 1,
wherein the hash processing unit is configured to generate the first hash for a first range within the captured image and the metadata, and generate the second hash for a second range broader than the first range.

6. The image processing device according to claim 5,
wherein the first range is a range excluding some data within the captured image and the metadata, and
the second range is an entirety of the captured image and the metadata.

7. The image processing device according to claim 6,
wherein the some data is data pertaining to predetermined processing on the captured image.

8. The image processing device according to claim 7,
wherein the data pertaining to the predetermined processing includes at least one piece of data pertaining to rotation, data pertaining to a rating, or
International Press Telecommunications Council (IPTC) metadata.

9. The image processing device according to claim 1,
wherein the hash processing unit is configured to generate the first hash as a multihash constituted by a plurality of mutually-independent hashes.

10. The image processing device according to claim 9,
wherein the hash processing unit is configured to generate the second hash as the multihash.

11. The image processing device according to claim 9,
wherein the hash processing unit is configured to generate the first hash as the multihash constituted by more hashes than the second hash.

12. The image processing device according to claim 1,
wherein the file generation unit is configured to store the first signature in a metadata area, of the file, that stores the metadata.

13. The image processing device according to claim 12,
wherein the file generation unit is configured to store the first signature in an area, within the metadata area, that is propagated by a history.

14. The image processing device according to claim 13,
wherein the file generation unit is configured to store the first signature in a vendor extension area within the metadata area.

15. The image processing device according to claim 14,
wherein the hash processing unit generates, independent from other hashes, a deletion hash corresponding to an area, of the captured image and the metadata, that is deleted in the history, and generates the first hash as a multihash constituted by a plurality of mutually-independent hashes including the deletion hash.

16. The image processing device according to claim 1,
wherein the file generation unit is configured to store the limited public key in an encrypted state in the file.

17. An image processing method comprising:
generating a first hash corresponding to a first signature and a second hash corresponding to a second signature using a captured image and metadata;
generating the first signature using a first private key and the first hash, and
generating the second signature using a second private key and the second hash; and
generating a file storing the captured image, the metadata, the first signature, and the second signature,
wherein the first private key corresponds to a limited public key publicized only to a first entity having specific privileges other than user privileges, and
the second private key corresponds to a user public key also publicized to a second entity having the user privileges.

18. An image processing device comprising:
a file obtainment unit that obtains a file storing an image, metadata, a first signature, and a second signature; and
a verification unit that verifies authenticity of the image using a limited public key publicized only to a first entity having specific privileges other than user privileges, the image, the metadata, and the first signature,
wherein the first signature is a signature generated using a first private key corresponding to the limited public key, a captured image corresponding to the image, and metadata of the captured image, and
the second signature is a signature generated using a second private key corresponding to a user public key also publicized to a second entity having the user privileges, the image, and the metadata.

19. The image processing device according to claim 18, further comprising:
a decrypting unit that decrypts the limited public key in an encrypted state,
wherein the verification unit is configured to verify the authenticity of the image using the limited public key that has been decrypted, the image, the metadata, and the first signature.

20. The image processing device according to claim 19, further comprising:
a limited public key obtainment unit that obtains the limited public key in the encrypted state, the limited public key being supplied from another device,
wherein the decrypting unit is configured to decrypt the limited public key in the encrypted state that has been obtained.

21. The image processing device according to claim 19,
wherein the decrypting unit is configured to extract the limited public key in the encrypted state from the file and decrypt the limited public key.

22. An image processing method comprising:
obtaining a file storing an image, metadata, a first signature, and a second signature; and
verifying authenticity of the image using a limited public key publicized only to a first entity having specific privileges other than user privileges, the image, the metadata, and the first signature,
wherein the first signature is a signature generated using a first private key corresponding to the limited public key, a captured image corresponding to the image, and metadata of the captured image, and
the second signature is a signature generated using a second private key corresponding to a user public key also publicized to a second entity having the user privileges, the image, and the metadata.
